(19) **Europäisches Patentamt**

**European Patent Office**

**Office européen des brevets**

(11) **EP 0 424 138 B1**

(12) **EUROPEAN PATENT SPECIFICATION**

(45) Date of publication and mention
of the grant of the patent:
**10.07.1996 Bulletin 1996/28**

(51) Int Cl.$^6$: **H04N 5/783**, H04N 5/93

(21) Application number: **90311425.4**

(22) Date of filing: **18.10.1990**

(54) **Video signal recording-reproduction device**

Videosignalaufzeichnungs- und -wiedergabegerät

Dispositif d'enregistrement-reproduction de signal vidéo

(84) Designated Contracting States:
**DE FR GB**

(30) Priority: **18.10.1989 JP 270969/89**

(43) Date of publication of application:
**24.04.1991 Bulletin 1991/17**

(73) Proprietor: **SHARP KABUSHIKI KAISHA
Osaka 545 (JP)**

(72) Inventor: **Katayama, Hironobu
Chiba-ken (JP)**

(74) Representative: **Brown, Kenneth Richard et al
R.G.C. Jenkins & Co.
26 Caxton Street
London SW1H 0RJ (GB)**

(56) References cited:
**EP-A- 0 098 727       EP-A- 0 180 445
EP-A- 0 240 364       EP-A- 0 291 934
US-A- 4 710 826**

- **PATENT ABSTRACTS OF JAPAN vol. 12, no. 104
(P-685)(2951) 6 April 1988 & JP-A-62 236 104**
- **PATENT ABSTRACTS OF JAPAN vol. 13, no. 309
(P-898)(3657) 14 July 1989 & JP-A-1 082 315**

## Description

FIELD OF THE INVENTION

The present invention relates to a recording-reproduction mechanism highly suited, for example, to the recording-reproduction of wideband video signals of HDTV. In particular, it proposes a simplified variable speed reproduction method far a recording-reproduction mechanism which divides and records onto a plurality of tracks the video signals for one field.

BACKGROUND OF THE INVENTION

In recent years, research into so-called HDTV (High Definition Television) has much advanced, wherein the number of horizontal scanning lines has been increased to 1125 with a view to improving picture quality. In conjunction with this, VTRs (Video Tape Recorders) which record-reproduce HDTV video signals are being developed. As an example of this kind of VTR for recording an HDTV signal (hereinafter referred to simply as HDTV-use VTR), there is the so-called 1/2 inch VTR which records onto 1/2 inch magnetic tape stored in cassette.

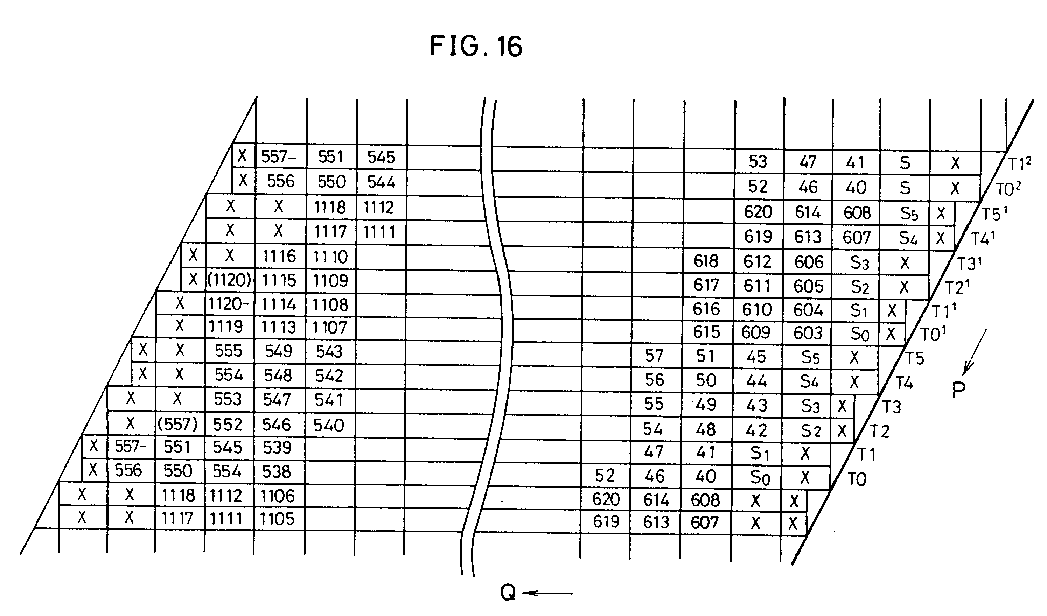

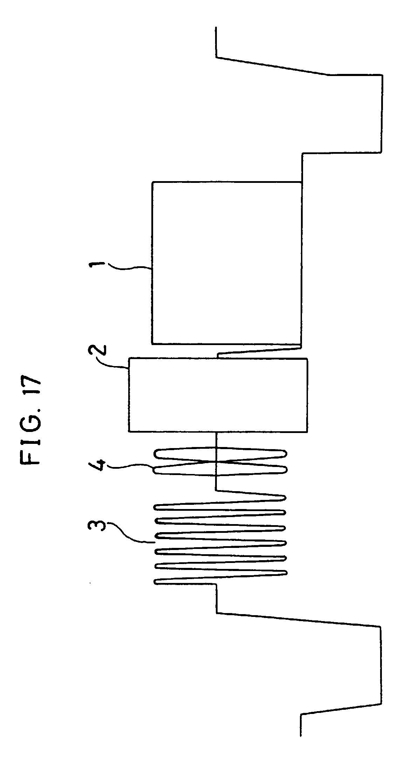

Fig. 16 shows the tape format of the above-mentioned 1/2 inch VTR. An HDTV signal is divided into a luminance signal and two color-difference signals, PB and PR. After PB and PR undergo time base compression and are put in line sequence, they are then subject to time base multiplication together with the luminance signal within 1 horizontal period, and the TCI (Time Compressed Integration) signal is formed (see Fig. 17). If the time base of the TCI signal is given double extension, it is divided and recorded onto each track (for example, T0 to T5) of the above-mentioned magnetic tape.

The tape format of Fig. 16 shows the division method for the case where the rotary head drum is made to revolve at 5400 rpm; one field here consists of six tracks (track numbers T0, T1, etc. are affixed to the right end of Fig. 16). The numerals written above each track indicate the horizontal scanning line numbers (called hereafter "line numbers"), X is a reserve area, $S_0$, $S_1$... are segment synchronizing signals, arrow P shows the movement direction of the magnetic tape, arrow Q the direction of travel of the head. Furthermore, as shown in Fig. 17, in addition to luminance signal 1 and color signal 2, the TCI signal comprises burst signal 3 and discrimination signal 4.

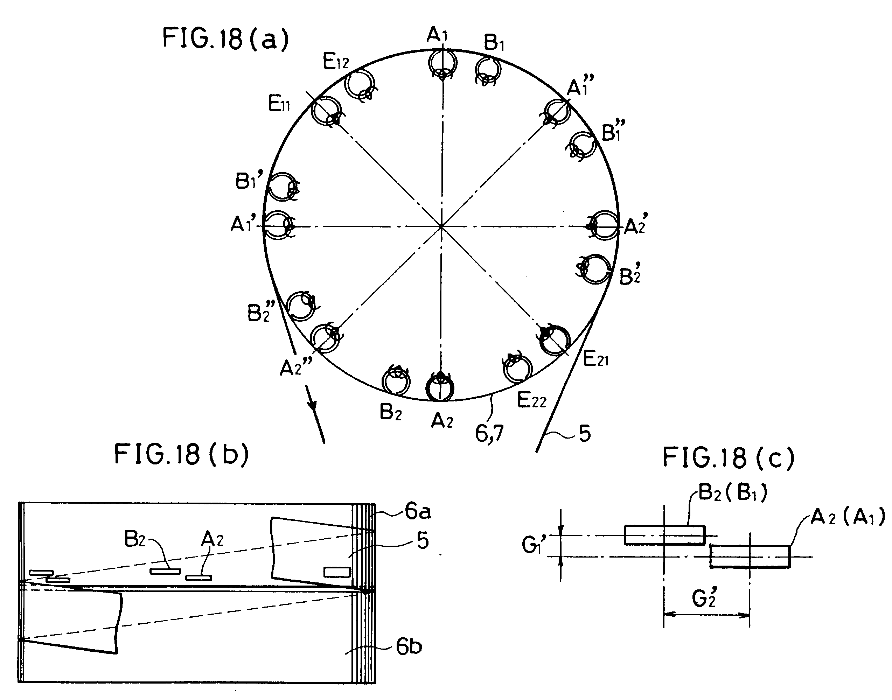

Fig. 18 shows the configuration of the above-mentioned rotary head drum. As shown in (b) of the same Figure, the rotary head drum is provided with upper drum 6a and lower drum 6b. By means of the one pair of recording-reproduction heads $A_1$ and $B_1$ (see (a) of the same Figure) and another pair of recording-reproduction heads $A_2$ and $B_2$ which respectively lie 180 degrees opposite the heads $A_1$ and $B_1$, the above-mentioned TCI signal is divided and recorded onto each track of magnetic tape 5. Recording-reproduction heads

$A_1$ and $A_2$ possess the same azimuth angles and recording-reproduction heads $B_1$ and $B_2$ likewise possess identical azimuth angles, while the azimuth angles of the two sets of recording-reproduction heads $A_1$ - $A_2$ and $B_1$ - $B_2$ differ.

The height disparity $G_1'$ (see (c) of the same Figure) between the above-mentioned recording-reproduction head $A_1$ or $A_2$ and the recording-reproduction head $B_1$ or $B_2$ is set, for example, at a level of 0.023mm and the gap interval $G_2'$, for example, at a level of 3.979mm. Now, to the above-mentioned rotary head drums, there are further added two pairs of advanced reproduction heads $A_1'$ - $B_1'$ and $A_2'$

- $B_2'$, two pairs of simultaneous reproduction heads $A_1''$-$B_1''$ and $A_2''$ - $B_2''$, and two pairs of rotary erase heads $E_{11}$
- $E_{12}$ and $E_{21}$ - $E_{22}$.

Next, regarding the above-mentioned 1/2 inch VTR, explanation will be given concerning the case of variable speed reproduction in double speed mode which sends the magnetic tape 5 at a speed twice that of ordinary reproduction for purposes such as search.

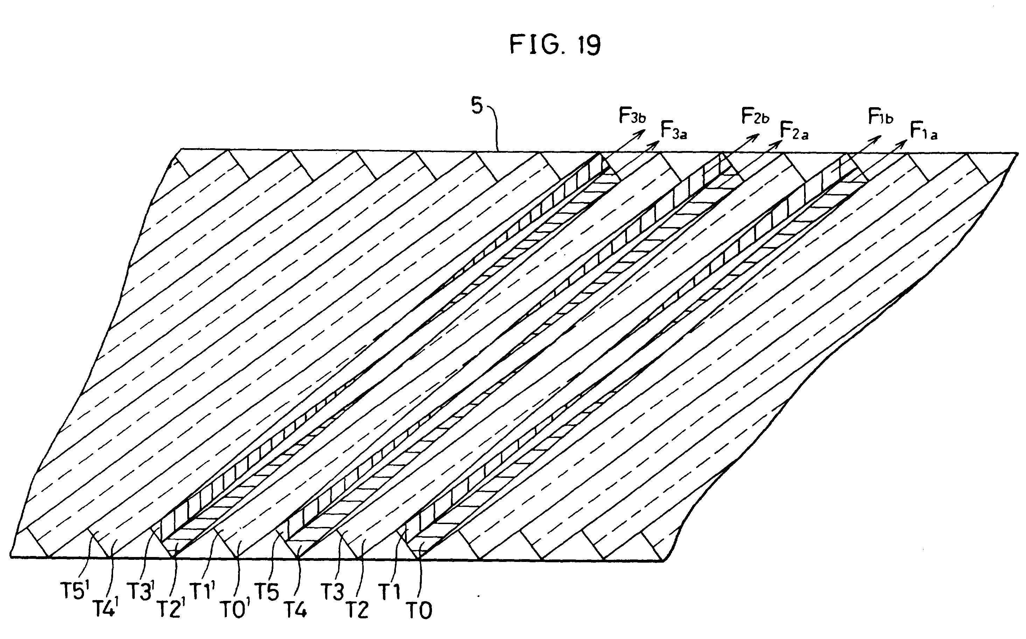

As is shown by the hatching of Fig. 19, in double speed mode, the signals for four tracks T0 to T3 are partially reproduced in the first scan (retrace) of the magnetic tape 5 which occurs by means of recording-reproduction heads $A_1$ and $B_1$ (hereinafter referred to simply as "heads $A_1$ and $B_1$"). Based on the setting of the azimuth angles, tracks T0 and T2 are reproduced by the head A1, while the tracks T1 and T3 are reproduced by the head $B_1$.

Similarly to the above, in the second retrace by recording-reproduction heads $A_2$ and $B_2$ (hereafter referred to simply as "heads $A_2$ and $B_2$"), reproduction of part of regions for T4 to $T1^1$ is carried out as shown by the hatching. In this case, also in like manner to the above, the tracks T4 and $T0^1$ are reproduced by the head $A_2$, while the tracks T5 and $T1^1$ are reproduced by the head $B_2$.

To simplify the following explanation, the number of horizontal scanning lines for one field is set at 36 lines, far below that of actual HDTV, and the signals for this one field are recorded onto six tracks.

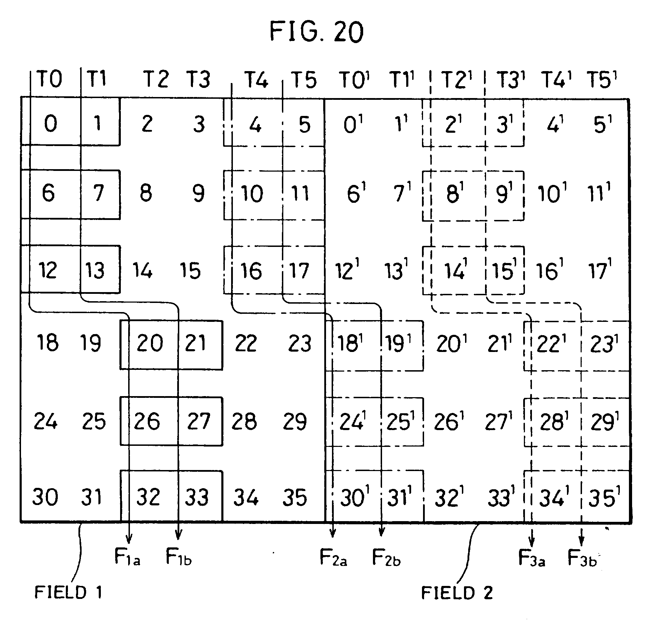

Fig. 20 shows the horizontal scanning line numbers in the case of reproduction in an ordinary reproduction mode on a screen of HDTV display (hereinafter referred to simply as HDTV screen). Each line number corresponds to signals recorded on each track of magnetic tape 5. If the number of horizontal scanning lines (hereafter referred to as "lines") for one field is assumed to be 36, as was indicated above, then in the one example of track T0 are recorded signals corresponding to the six lines of line numbers "0, 6, 12, 18, 24, 30." Entries showing a number n (n = 1, 2,...) affixed to the upper right of the line number indicate thereby that the line in question belongs to number (n + 1) field. For example, "0¹" means a line with the line number "0" belonging to field number 2.

For this case, in variable speed reproduction in double speed mode and in the first retrace by the heads $A_1$ and $B_1$, the lines of line numbers "0, 6, 12, 20, 26, 32" are reproduced by the head $A_1$ in order and paralleling an arrow $F_{1a}$. Similarly, the lines of line numbers "1, 7, 13, 21, 27, 33" are reproduced by the head $B_1$ in order and paralleling an arrow $F_{1b}$.

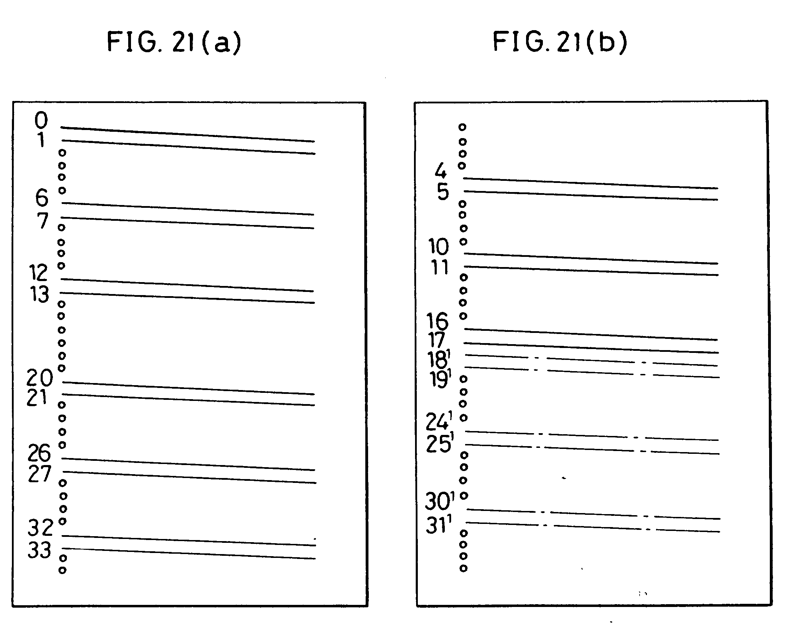

In Fig. 21 (a), a typical depiction is given of the circumstances where scanning has been conducted on screen only with the lines reproduced in the first retrace by heads $A_1$ and $B_1$ The numbers appearing on the left end of this same Figure indicate the line numbers. In this case, reproduction is conducted for two lines in succession with a gap of four to six lines omitted between these contiguous pairs. On the whole, since the variance in intervals between the contiguous lines is large, it is difficult to form a pictorial image possessing sufficient picture quality for the conducting of search and other operations only with the first retrace by the heads $A_1$ and $B_1$.

In the second retrace by heads $A_2$ and $B_2$ following on completion of the retrace by the heads $A_1$ and $B_1$, the signals for six lines are reproduced by the head $A_2$ paralleling an arrow $F_{2a}$ shown in Figures 19 and 20. Simultaneously, the head $B_2$ reproduces the signals for six lines, contiguously paired with the six lines reproduced by the head $A_2$, paralleling an arrow $F_{2b}$. In Fig. 21 (b), a depiction is given of the circumstances where scanning has been conducted on screen only with the lines whose signals were reproduced in the second retrace by heads $A_2$ and $B_2$.

In the third retrace by the heads $A_1$ and $B_1$, reproduction occurs by the heads $A_1$ and $B_1$ respectively paralleling arrows $F_{3a}$ and $F_{3b}$ of Figures 19 and 20. As can be seen from Fig. 20, since all the lines necessary for one field are comprehended when the heads $A_1$ - $B_1$ and $A_2$ - $B_2$ have together conducted a total of three retrace operations in a double speed mode, the image for one artificial field can be formed by compounding the signals which have been reproduced in two fields during the total of three retrace operations.

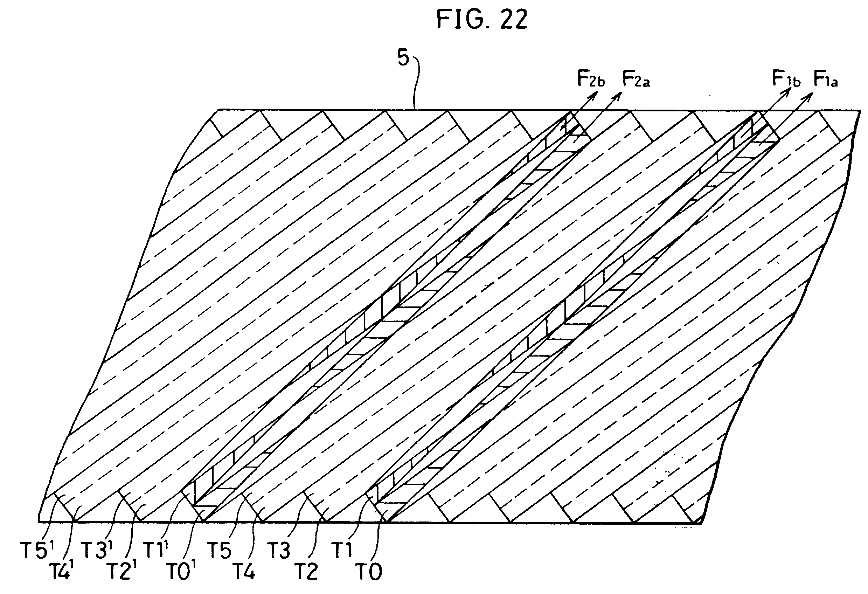

Next, in the case where variable speed reproduction is conducted while running the magnetic tape 5 in triple speed mode, the signals for the six tracks T0 to T5 are partially reproduced in the first retrace by the heads $A_1$ and $B_1$, as is shown by the hatching of Fig. 22. Similarly, the signals for the next six tracks T0¹ to T5¹ are partially reproduced in the second retrace by the heads $A_2$ and $B_2$.

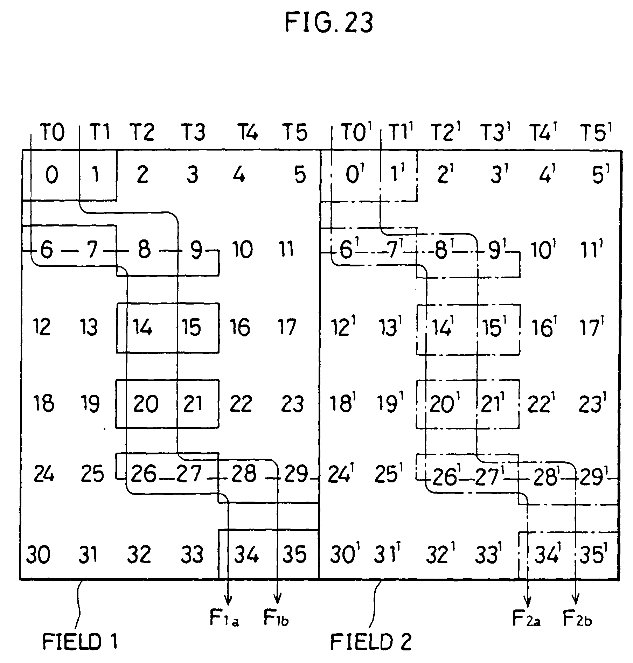

In this case, as shown in Fig. 23, in the first retrace by the heads $A_1$ and $B_1$, the signals corresponding to the six lines of line numbers "0", the first half of "6", the latter half of "8", followed by "14" and "20", the first half of "26", the latter half of "28", and "34" are reproduced in order by the head $A_1$ paralleling the arrow $F_{1a}$, while, simultaneously, the signals for six lines are reproduced

by the head $B_1$ paralleling the arrow $F_{1b}$.

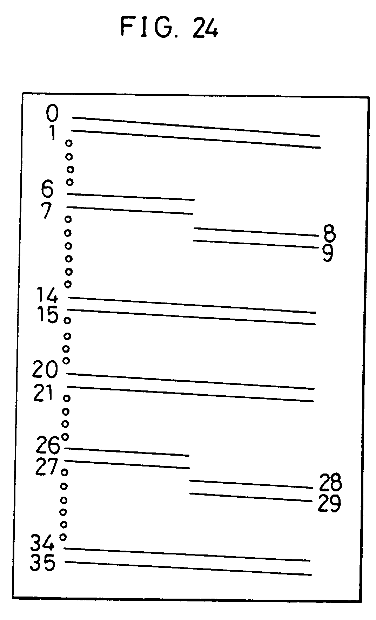

In this case, if a typical depiction is given of the circumstances where scanning has been conducted on screen only with the lines reproduced in the first retrace by the heads $A_1$ and $B_1$, an illustration like that of Fig. 24 results. As is clear from this Figure, since the number of lines omitted between the contiguous lines extends to a maximum of six, it is difficult to form a pictorial image possessing sufficient picture quality for the conduct of search and other operations on the basis of only one retrace.

Furthermore, in the case of the second retrace by the heads $A_2$ and $B_2$ in triple speed mode, reproduction is conducted by the head $A_2$ paralleling the arrow $F_{2a}$ of Figures 22 and 23, and by the head $B_2$ paralleling the arrow $F_{2b}$. In this case, the lines reproduced are common to those lines reproduced by the heads $A_1$ and $B_1$, in contrast to the above-described double speed mode, and, for example, even if the signals for three fields were compounded, no improvement in picture quality could be expected.

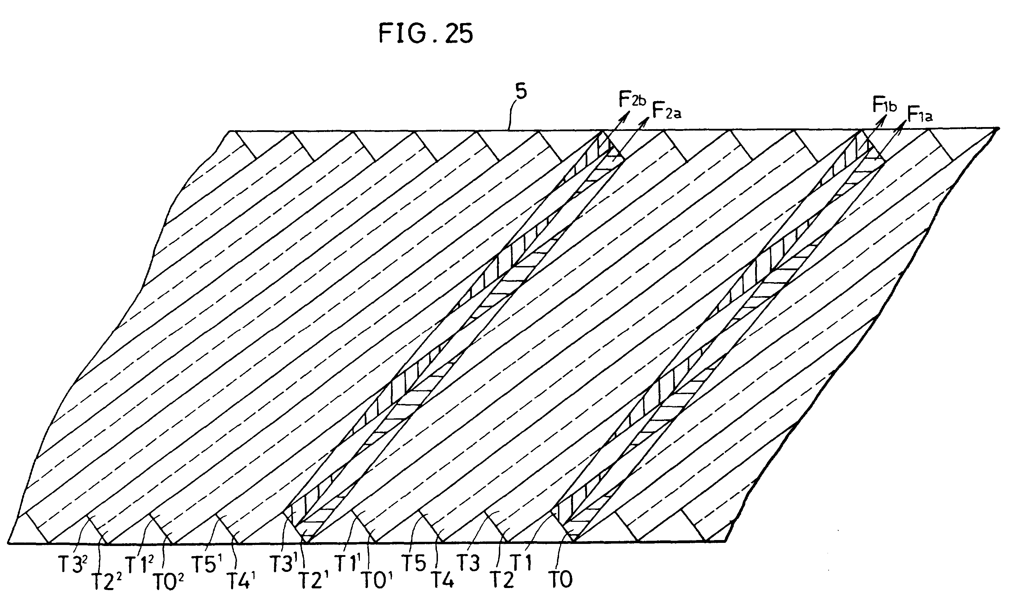

Next, in the case where variable speed reproduction is conducted in quadruple speed mode, the signals for the eight tracks T0 to T1¹ are partially reproduced in the first retrace by the heads $A_1$ and $B_1$, as is shown by the hatching in Fig. 25, and the signals for the next eight tracks T2¹ to T3² are partially reproduced in the second retrace by the heads $A_2$ and $B_2$.

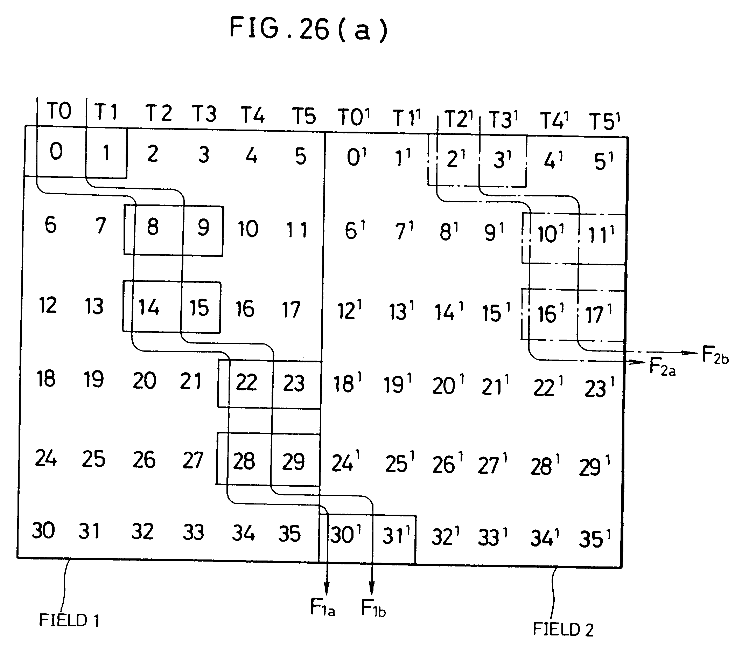

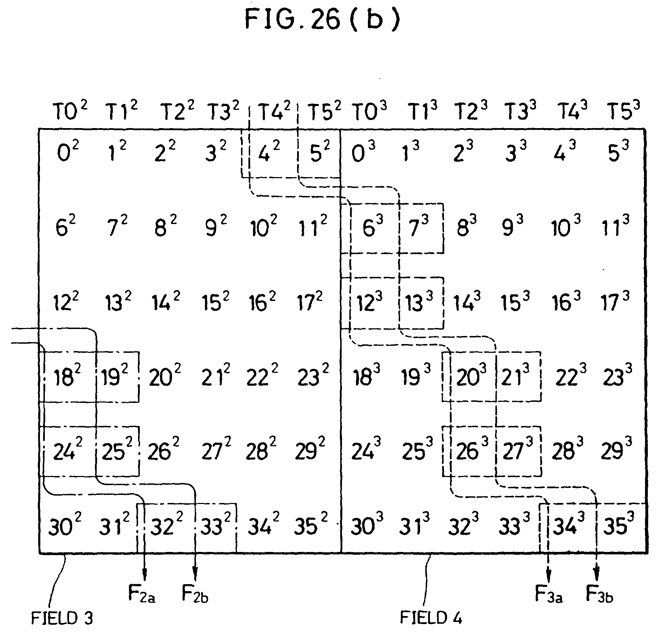

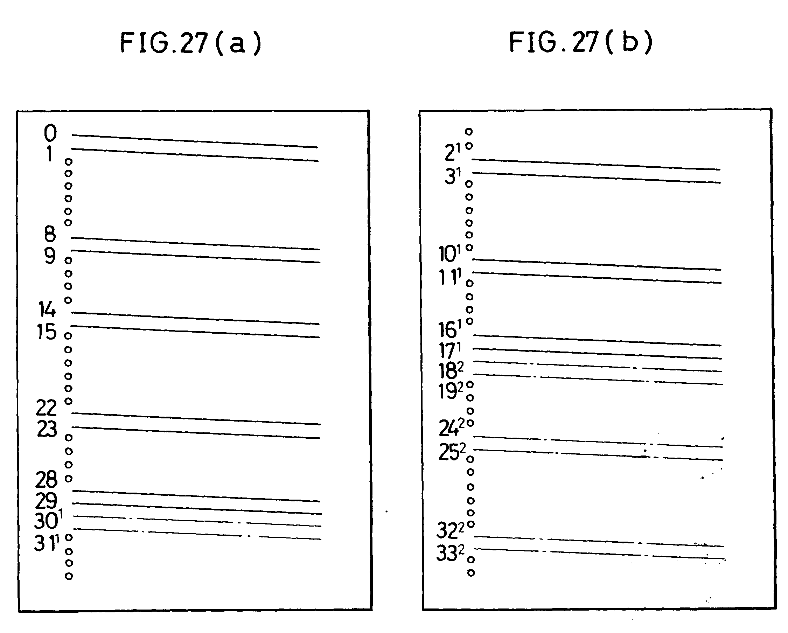

At this time, as is shown by Fig. 26 (a), in the first retrace by the heads $A_1$ and $B_1$ the signals for six lines are reproduced, respectively, by the head $A_1$ paralleling the arrow $F_{1a}$ and by the head $B_1$ paralleling the arrow $F_{1b}$. If a depiction is given of the circumstances where scanning has been conducted on screen only with the lines reproduced in the first retrace by the heads $A_1$ and $B_1$, an illustration like Fig. 27 (a) results and, since the number of lines omitted between contiguous lines extends to a maximum of six, it is difficult, as in previous examples, to form a pictorial image possessing sufficient picture quality for the conducting of search and other operations.

Next, as shown by Fig. 26 (a) and (b), in the second retrace by heads $A_2$ - $B_2$ the signals for 6 lines are reproduced, respectively, by head $A_2$ paralleling arrow $F_{2a}$ and by head $B_2$ paralleling arrow $F_{2b}$. If depiction is made of the circumstances where scanning has been conducted on screen only with the lines reproduced in the second retrace by heads $A_2$ - $B_2$, an illustration like that of Fig. 27 (b) results.

In the third retrace by the heads $A_1$ and $B_1$, as shown in Fig. 26 (b), the signals corresponding to six lines are reproduced, respectively, by the head $A_1$ paralleling the arrow $F_{3a}$ and by the head $B_1$ paralleling the arrow $F_{3b}$. With regard to this quadruple mode, by compounding the signals for the four fields which were reproduced in the total of three retraces by heads $A_1$ - $B_1$ and $A_2$ - $B_2$, it is possible to artificially form an image for one field.

As described above, in a case where, for example, the magnetic tape 5 is sent into fast forward at double speed or more and variable speed reproduction is conducted, in general it is difficult to form an image possessing sufficient picture quality for the conducting of search and other operations on the basis of only one retrace. For the cases of double speed and quadruple speed, as was shown in the above examples, by compounding the signals for the two fields or four fields it is possible to artificially form a one-field image, but there are problem points arising from the fact that as the number of fields to be compounded increases it becomes necessary to set up large volumes of memory capacity.

Furthermore, as in the above-given example of triple speed mode, in a case where a fixed relation is established between the track numbers per field and the running speed of the magnetic tape 5, even by compounding the video signals of a plurality of fields it is not possible to obtain video signals comprehending all the lines for one field. Accordingly, there is a problem of restraints arising on the choice of running speed for the case where the magnetic tape 5 is sent into fast forward and variable speed reproduction is performed such as in search, slow or still mode picture of VTR.

Moreover, with regard to conventional HDTV-use VTRs, while display of reproduced images is effected on the screen of HDTV display on occasions when variable speed reproduction is performed in a double or other speed mode for purposes of search, slow and still, significant problems exist since not only is confirmation of the images being fast forwarded troublesome but also performance of variable speed reproduction on HDTV-use screens is economically unprofitable.

EP-A-0 180 445 discloses a variable speed reproduction method for video signals divided up and recorded on tracks, comprising reproducing signals from a plurality of tracks at a speed varying from a normal reproduction speed by using a plurality of dynamic tracking heads, rearranging the reproduced signals in order from a low line number to a high line number and forming variable speed reproduction video signals having this order, and displaying a pictorial image based on the video signals formed from variable speed reproduction.

## SUMMARY OF THE INVENTION

The present invention provides a video signal reproduction device which, using only a part of the recorded video signals, is capable of forming a pictorial image with a degree of picture quality sufficient for the conduct of variable speed reproduction for search.

In one aspect, the present invention, as defined by claim 1, provides a video signal reproduction device which divides up and records video signals for one field on a plurality of tracks and reproduces the video signals recorded on the tracks, the device comprising:

at least one pair of reproduction heads for reproducing video signals from the plurality of tracks during normal speed operations; and

variable speed reproduction means for forming video signals during variable speed reproduction, whose video signal bandwidth is compressed, using a portion of the video signals recorded on the tracks; said variable speed reproduction means including at least one pair of variable speed reproduction heads for reproducing video signals from the plurality of tracks during variable speed operations, the heads of the or each pair of variable speed reproduction heads having height disparities set in such a manner that video signals corresponding to horizontal scanning lines appearing at substantially regular line intervals on a reproduction screen are reproduced from the tracks.

According to the invention, since the video signals corresponding to nearly regular line interval horizontal scanning lines are selected and reproduced, it is possible to form pictorial images possessing sufficient picture quality for the conduct of search using only a portion of the recorded video signals. Therefore, since processing involving the compounding of video signals for a plurality of fields is not necessarily required in the case of reproduction at variable speed, it is possible to set as desired the running speed of the magnetic tape when, for example, performing search by means of a fast-forward operation.

In an embodiment of the invention, a display means is provided for displaying a pictorial image based on the video signals produced during variable speed reproduction. This display means can be much smaller and simpler than the normal display screen and enables the conducting of search by a fast-forward operation to be effected with greater efficiency than is the case with use of the normal display screen.

In another aspect, the present invention provides the variable speed reproduction method for video signals which is defined by claim 7.

## BRIEF DESCRIPTION OF THE DRAWINGS

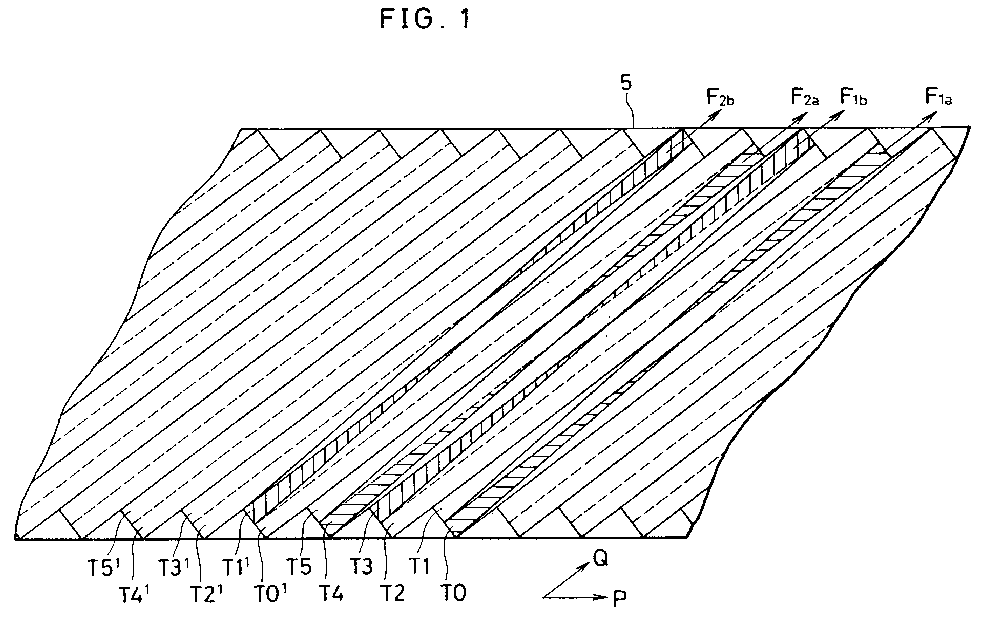

Figs. 1 to 6 show one embodiment of the present invention.

Fig. 1 is an explanatory view showing disposition of magnetic tape tracks and retrace during variable speed reproduction.

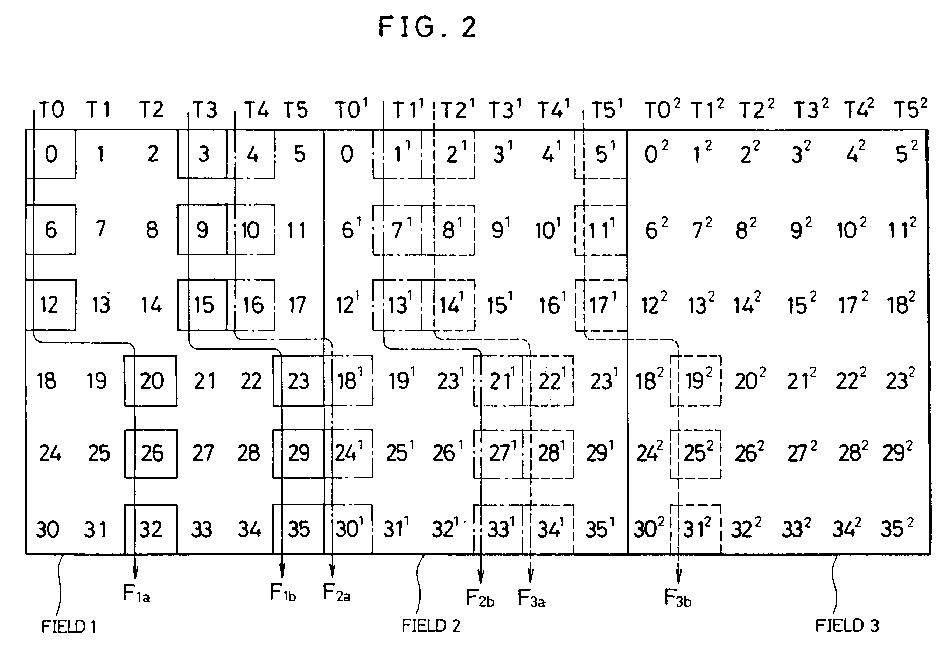

Fig. 2 is an explanatory view showing the combination of horizontal scanning lines subject to variable speed reproduction.

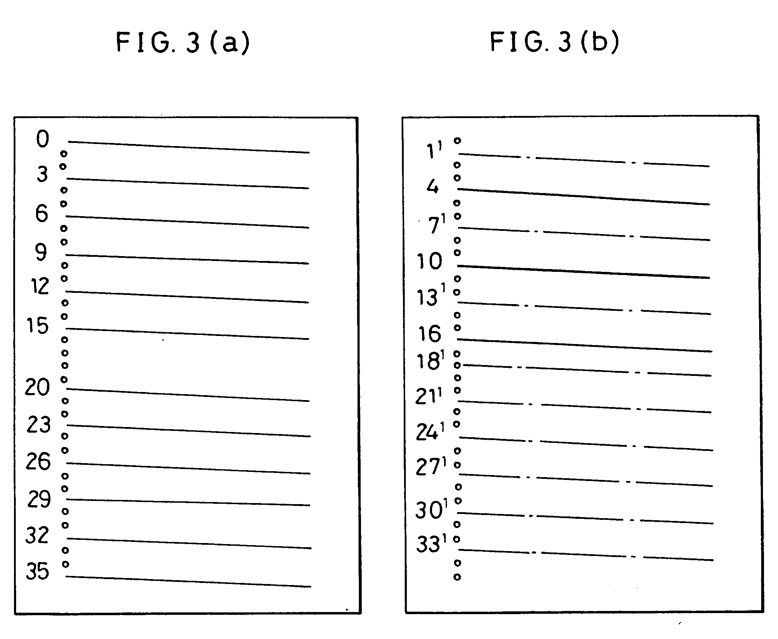

Fig. 3 (a) and Fig. 3 (b) are each explanatory views showing the disposition on screen of horizontal scanning lines resulting from variable speed reproduction.

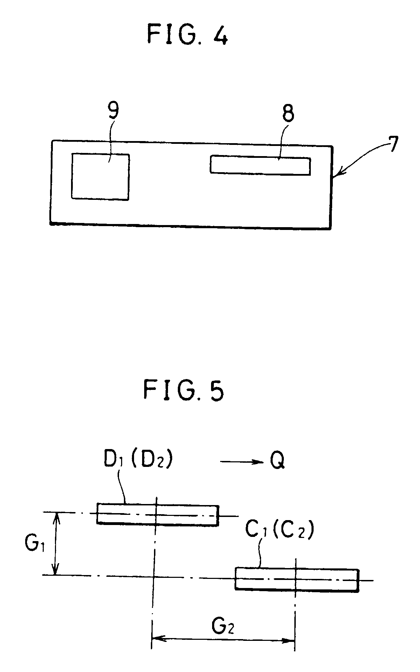

Fig. 4 is a schematic front view of an HDTV-use VTR.

Fig. 5 is an explanatory view showing the disposition of variable speed reproduction heads.

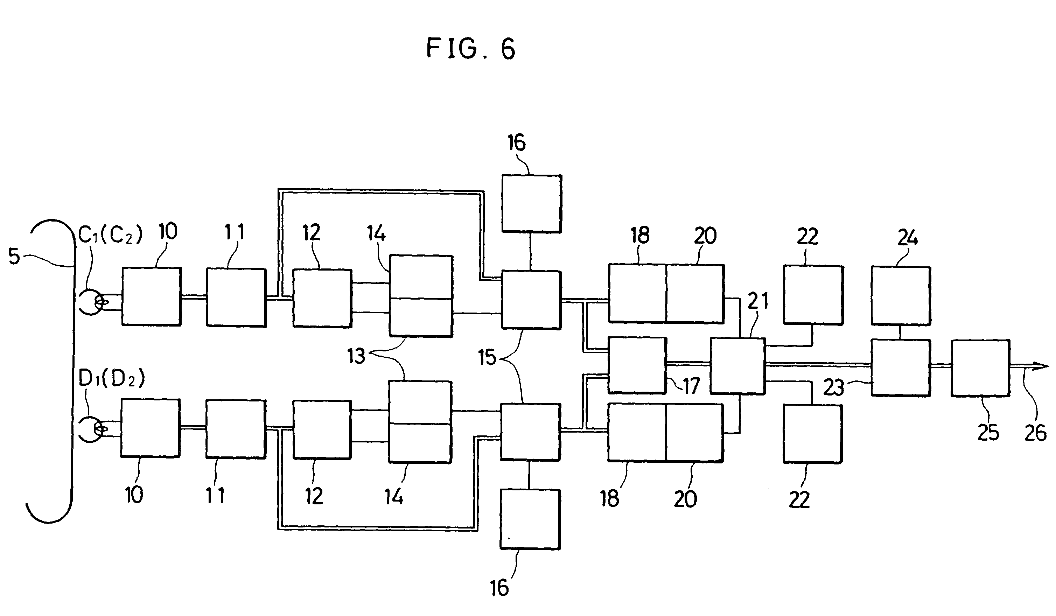

Fig. 6 is a block diagram showing a reproduction signal processing circuit.

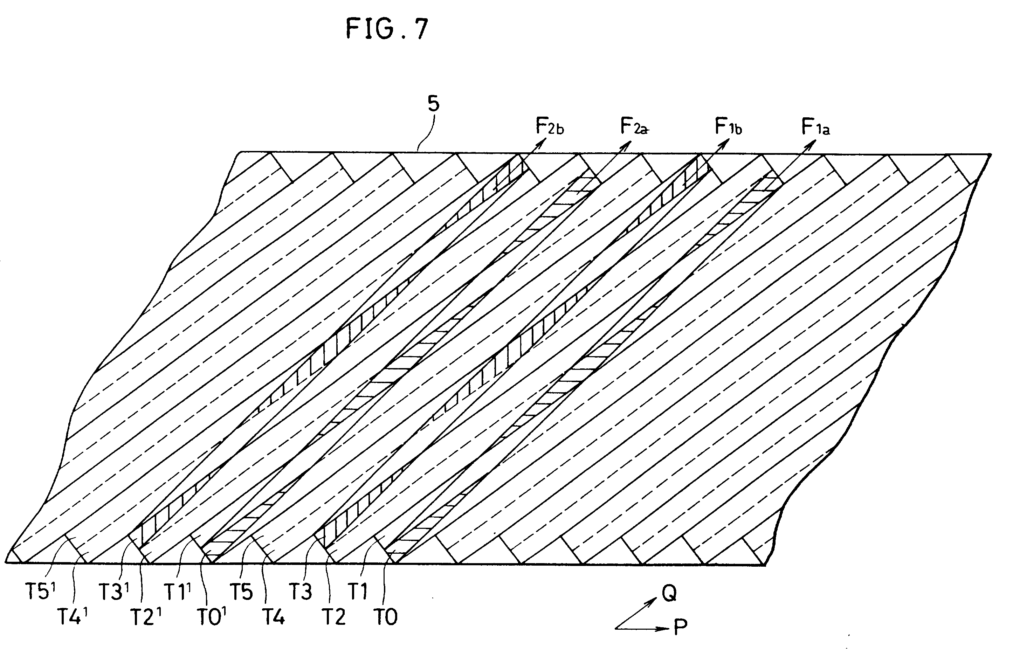

Figs. 7 to 9 show another embodiment of the present invention.

Fig. 7 is an explanatory view showing disposition of the magnetic tape tracks and retrace during variable speed reproduction.

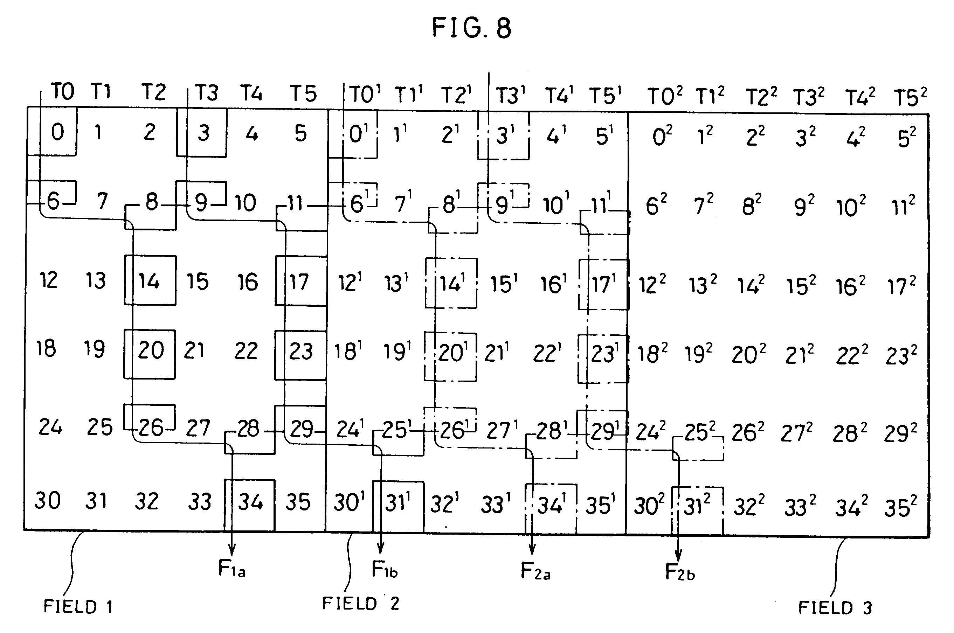

Fig. 8 is an explanatory view showing the combination of horizontal scanning lines subject to variable speed reproduction.

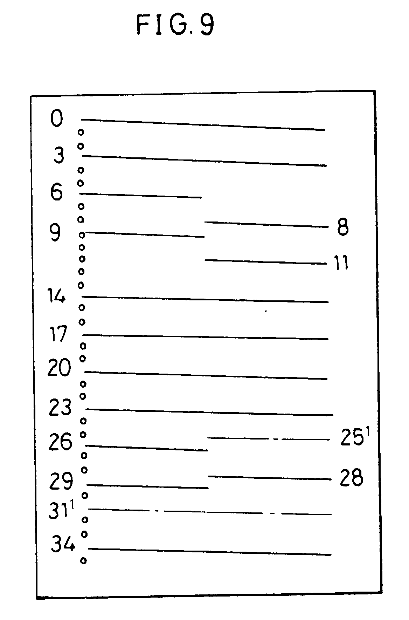

Fig. 9 is an explanatory view showing the disposition on screen of the horizontal scanning lines resulting from variable speed reproduction.

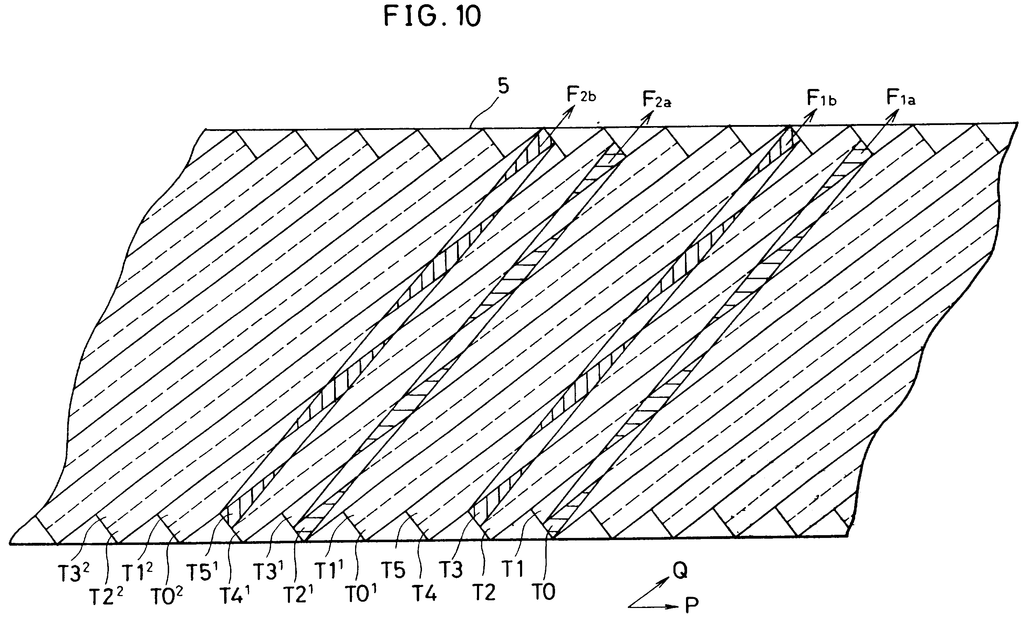

Figs. 10 to 12 show a further embodiment of the present invention.

Fig. 10 is an explanatory view showing disposition of the magnetic tape tracks and retrace during variable speed reproduction.

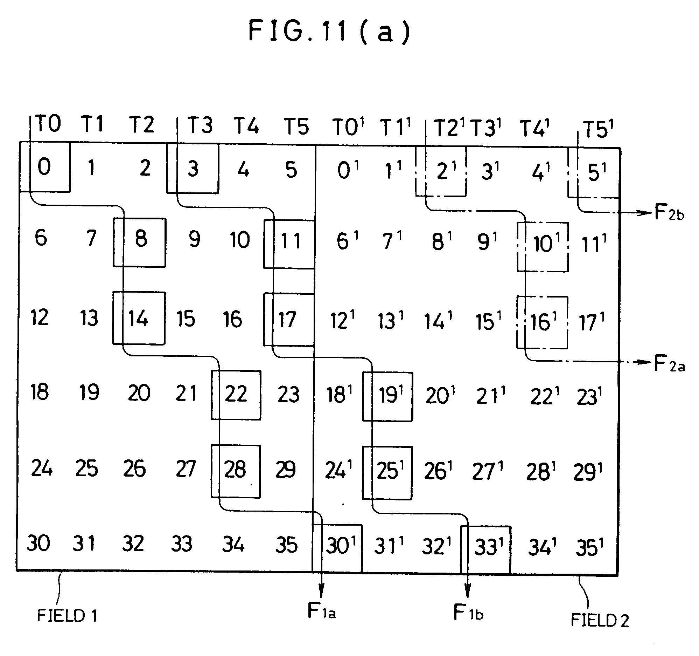

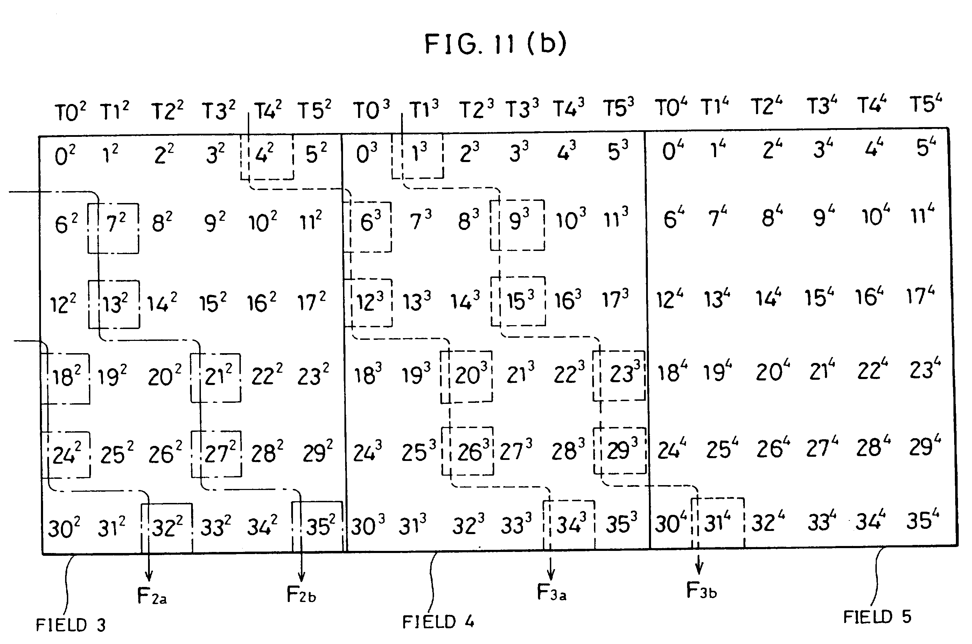

Fig. 11 (a) and Fig. 11 (b) are each explanatory views showing the combination of horizontal scanning lines subject to variable speed reproduction.

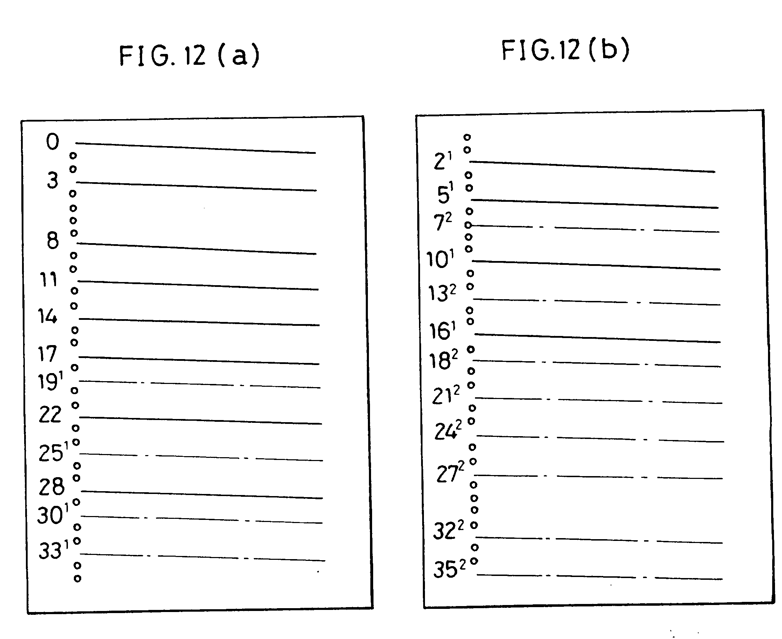

Fig. 12 (a) and Fig. 12 (b) are each explanatory views showing the disposition on screen of the horizontal scanning lines resulting from variable speed reproduction.

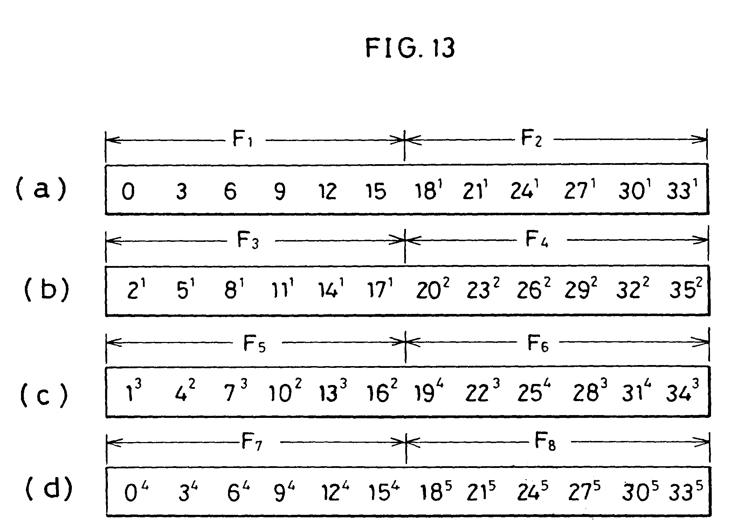

Figs. 13 to 15 each show examples of video signal compounding for other embodiments of the present invention.

Figs. 16 to 27 show conventional examples.

Fig. 16 is an explanatory view showing recording format for magnetic tape.

Fig. 17 is a time chart showing TCI waveform.

Fig. 18 (a) is a schematic plan view of a rotary head drum.

Fig. 18 (b) is a schematic front view of the same.

Fig. 18 (c) is an enlarged fragmentary view of Fig. 18 (b).

Fig. 19 is an explanatory view showing disposition of the magnetic tape tracks and retrace for double speed mode.

Fig. 20 is an explanatory view showing the combination of horizontal scanning lines subject to variable speed reproduction in double speed mode.

Fig. 21 (a) and Fig. 21 (b) are each explanatory views showing the disposition on screen of the horizontal scanning lines resulting from variable speed reproduction in a double speed mode.

Fig. 22 is an explanatory view showing disposition of the magnetic tape tracks and retrace for triple speed mode.

Fig. 23 is an explanatory view showing the combination of horizontal scanning lines subject to variable speed reproduction in triple speed mode.

Fig. 24 is an explanatory view showing the disposition on screen of the horizontal scanning lines resulting from variable speed reproduction in triple speed mode.

Fig. 25 is an explanatory view showing disposition of the magnetic tape tracks and retrace for quadruple speed mode.

Fig. 26 (a) and Fig. 26 (b) are each explanatory views showing the combination of horizontal scanning lines subject to variable speed reproduction in quadruple speed mode.

Fig. 27 (a) and Fig. 27 (b) are each explanatory views showing the disposition on screen of the horizontal scanning lines resulting from variable speed reproduction in quadruple speed mode.

DETAILED DESCRIPTION OF THE EMBODIMENTS

An explanation of one embodiment of the present invention with reference to Figs. 1 to 6 yields the following.

As is shown in Fig. 4, a video signal recording-reproduction device relating to the present embodiment comprises, for example, an HDTV-use VTR 7 conducting recording-reproduction on a 1/2 inch magnetic tape stored in a cassette. This HDTV-use VTR 7 is provided with an insertion door 8 for insertion of the above-mentioned cassette (not shown in the Figure) and with a simplified monitor 9 serving as a display means for variable speed reproduction which displays a pictorial image formed by variable speed reproduction in a fast forward mode. This simplified monitor 9 can be given the same structure as, for example, a so-called S-VHS correspondence simplified monitor and, specifically, makes use of a small-sized CRT or liquid crystal display.

As explained above, the display of the pictorial image in variable speed reproduction is performed not by the HDTV screen but by the simplified monitor 9 separately incorporated into the HDTV-use VTR 7. In addition to its application to variable speed reproduction, the simplified monitor 9 can be used in a variety of other ways, for example, for program reservation, timer, display of remaining capacity of the magnetic tape 5 (Fig. 1), editing information and time code display, etc.

The HDTV-use VTR 7 is provided with two pairs of recording-reproduction heads whose height disparities and gap intervals are set equal to those of the recording-reproduction heads $A_1$ - $B_1$ and $A_2$ - $B_2$ of the conventional example shown in Fig. 18.

Moreover, as shown in Fig. 5, this HDTV-use VTR 7 is provided with two pairs of variable speed reproduction heads $C_1$ - $D_1$ and $C_2$ - $D_2$ (only one pair is shown in the Figure) The height disparity $G_1$ between variable speed reproduction heads $C_1$ - $D_1$ or between $C_2$ - $D_2$ is made, for example, to be three times the height disparity between the paired recording-reproduction heads (which is identical to $G_1{'}$ in Fig. 18 (c)) and, as a result of this, as is stated below, the paired variable speed reproduction heads $C_1$ - $D_1$ and $C_2$ - $D_2$ are respectively set to perform retrace from positions three tracks removed from one another on the magnetic tape 5. Furthermore, a gap interval $G_2$ which is the interval between head gaps of the corresponding variable speed repro-

duction heads $C_1$ - $D_1$ or $C_2$ - $D_2$ is the same as the gap interval between those of the paired recording-reproduction heads (identical to $G_2'$ in Fig. 18 (c)).

If the recording-reproduction heads are established in the same positions as the recording-reproduction heads $A_1$ - $B_1$ and $A_2$ - $B_2$ of conventional examples (Fig. 18 (a)), then the above-mentioned variable speed reproduction heads $C_1$ - $D_1$ and $C_2$ - $D_2$ can be established either in the positions in which were established, for example, the simultaneous reproduction heads $A_1''$ - $B_1''$ and $A_2''$ - $B_2''$ of the conventional example, or in positions differing fro those of the recording-reproduction heads. It is also possible to provide this HDTV-use VTR 7 with heads other than the recording-reproduction heads and the variable speed reproduction heads $C_1$ - $D_1$ and $C_2$ - $D_2$ as necessary.

Below, variable speed reproduction in a double speed mode using the variable speed reproduction heads $C_1$ - $D_1$ and $C_2$ - $D_2$ of the present embodiment will be discussed.

As shown in Fig. 1, for the case of double speed mode, when the first retrace of the magnetic tape 5 by the variable speed reproduction heads $C_1$ - $D_1$ (called simply "heads $C_1$ - $D_1$" hereafter) occurs, the head $C_1$ conducts partial retrace of three tracks T0 to T2 and, as shown by the hatching, partially reproduces the signals for the tracks T0 and T2 based on the settings of the azimuth angles. Simultaneous with this, the head $D_1$ partially retraces tracks T3 to T5 of a position three tracks removed from that of head $C_1$, and partially reproduces the signals for the tracks T3 and T5.

In case of recording onto the magnetic tape 5, recording is performed simultaneously and in parallel onto, for example, the contiguous pair of tracks T0 - T1 by one pair of recording-reproduction heads. The same may be said for tracks T2 - T3, etc. Furthermore, an arrow P in Fig. 1 shows the direction in which the magnetic tape 5 is running, while an arrow Q shows the direction of motion of the above-mentioned recording-reproduction heads in ordinary reproduction.

As shown in Fig. 2, the relation concerning onto which track of the magnetic tape 5 is recorded the signal corresponding to a certain number horizontal scanning line (hereafter referred to as "line") for the case reproduced in an ordinary reproduction mode on the HDTV screen is identical to the conventional example shown in Fig. 20. In order to simplify explanation, the number of lines forming the pictorial image for one field is limited to 36 for the present embodiment, as well.

For this case, as shown in Fig. 2, in the first retrace by the heads $C_1$ - $D_1$ the signals corresponding to six lines of line numbers "0, 6, 12, 20, 26, 32" are reproduced by the head $C_1$ along an arrow $F_{1a}$, while, simultaneously, the signals corresponding to six lines of line numbers "3, 9, 15, 23, 29, 35" are reproduced by the head $D_1$ along an arrow $F_{1b}$. The signals reproduced in this manner by the heads $C_1$ - $D_1$ are then rearranged in order from the low line number by a reproduction processing circuit described below and become variable speed reproduction video signals.

In Fig. 3 (a), a typical depiction is given of the lines resulting when scanning is performed on the HDTV screen only with lines corresponding to the variable speed reproduction video signals formed by the signals reproduced in the first retrace by the heads $C_1$ - $D_1$. The numerals to the left of the Figure represent the line numbers. As is clear from Fig. 3, on the basis only of the first retrace by the heads $C_1$ - $D_1$, reproduction video signals can be reproduced for the most part at intervals of two omitted lines.

In Fig. 3 (b), the situation is shown where scanning has been performed only with the lines reproduced in the second retrace by the heads $C_2$ - $D_2$. In this case, as well, reproduction video signals can be reproduced for the most part at intervals of two omitted lines.

As shown by the above, with regard to the respective retraces of the heads $C_1$ - $D_1$ and $C_2$ - $D_2$ in the present embodiment, in both cases reproduction is able to be performed for the most part at every third line. Thus, the interval of omitted lines between neighboring lines remains fixed at two for the most part and, since this represents a reduction in the interval of omitted lines for the conventional case of a double speed mode shown in Fig. 19 (a) (b), it is possible to form a variable speed reproduction image based solely on the first-time retrace performed by the heads $C_1$ - $D_1$ or $C_2$ - $D_2$.

If a frame frequency of the HDTV signals recorded onto the magnetic tape 5 is made f [Hz], the line number for one field made L [lines], and a video band-width made B [Hz], variable speed reproduction video signals formed by the above method will yield the frame frequency of 3 f/2 [Hz], the line number of L/3 [lines], and the video band-width of B/2 [Hz]. If these variable speed reproduction video signals, remaining as TCI signals, are displayed on the above-described simplified monitor 9 which has been set to the frame frequency of 3 f/2 [Hz] and the line number L/3 [lines], the variable speed reproduction image can be reproduced as black and white television signals.

Regarding Fig. 3 (a), one can see that there is an interval of four lines between the line of line number "15" and the line of line number "20", while regarding Fig. 3 (b), on the other hand, there is only an interval of one line between the line of line number "16" and the line of line number "18[1]". With actual HDTV, however, the number of lines composing one field is far greater than 36 and, practically speaking, it is possible to effect adjustment to the extent that an irregularity of one line occurs, for example, at every 180 lines.

The video signal reproduction processing circuit, which plays the role of variable speed reproduction means, is explained below.

As shown in Fig. 6, the head $C_1$ (or $C_2$) and head $D_1$ (or $D_2$) are connected, respectively, to reproduction signal amplification circuits 10 of the above-mentioned reproduction processing circuit. After signals reproduced from the magnetic tape 5 have been amplified and equalized by the reproduction signal amplification circuits 10 which possess equalizing functions, they are demodulated into video signals by FM demodulation circuits 11.

The demodulated video signals are sent to sync separation circuits 12, as well as to TBCs (Time Base Error Correctors) 15 which serve to eliminate residual time base fluctuation. In the sync separation circuits 12, vertical synchronizing signals and horizontal synchronizing signals are separated, and each of these synchronizing signals are supplied to TBC write pulse generating circuits 13 and pair number computation circuits 14.

The above-mentioned TBC write pulse generating circuits 13 are for generation of the write pulses enabling write-in onto the TBCs 15 of the above-mentioned video signals according to each of the synchronizing signals. The pair number computation circuits 14 are for computation of the pair numbers showing, among the signals of the plurality of lines reproduced in order by a one-time retrace of the heads $C_1$ - $D_1$ or heads $C_2$ - $D_2$, the numbering pertaining to the order in which the signal was reproduced. In other words, for the above-mentioned case of the one-time retrace by the heads $C_1$ - $D_1$ in which a total of six lines were reproduced, the pair numbers pertaining to each line of this one-time retrace would be "1" to "6."

From the TBCs 15, respective reproduction video signals are read out according to read pulses generated by read pulse generating circuits 16. Both reproduction video signals are then supplied to a multiplexer 17 which serves to mix both reproduction video signals, and to track number discrimination circuits 18.

As concerns the track number discrimination circuits 18, track number is discriminated on the basis of track discrimination signals, each added to each horizontal cycle of the above-mentioned reproduction video signals.

Moreover, for the case where the track discrimination signals are not inserted with every horizontal cycle, since the changeover timing of the retrace by the heads $C_1$ - $D_1$ and the retrace by heads $C_2$ - $D_2$ is decided in accordance with the running speed of the magnetic tape 5, the above-mentioned retrace changeover timing can be obtained by, for example, a table ROM (READ ONLY MEMORY). In variable speed reproduction by fast forward, during one retrace on the magnetic tape 5 by each head $C_1$ - $D_1$ or $C_2$ - $D_2$, the signals for a plurality of tracks are reproduced (for example, in the case of double speed, as in Fig. 1, head $C_1$ reproduces signals for the 2 tracks T0 and T2 during one retrace), and track changeover occurs in a fixed manner with the terminating of signal reproduction for a certain amount of lines. Thus, for example, the number of reproduced lines is counted by a counter and at the point in time where the predetermined count value (3 lines in the case of double speed) is reached, a track changeover decision is made.

By means of the above kind of computational processing, it is possible to obtain the track number of the track on which was recorded each reproduction video signal.

Next, based on the pair numbers obtained by means of the previously mentioned pair number computation circuits 14 and the track numbers obtained by the track number discrimination circuits 18, a line number N showing to which line on screen corresponds each reproduction video signal can be obtained by the below arithmetical calculation. With track number j and pair number i, line number N is as follows:

$$N = 6 \, (i - 1) + j$$

The reproduction video signals mixed by the multiplexer 17 are stored in a memory 21 according to write pulses generated by memory write pulse generating circuits 20. At this time, the memory write pulse generating circuits 20 generate the addresses of the memory positions corresponding to the line numbers N, calculated in the above manner, in order to store the reproduction video signals in the memory 21. For the memory 21, to enable the storing on memory of, for example, the video signals for 1/3 of a field used in the display of a one-time variable speed reproduction image, it is best to have on hand a capacity somewhat greater than the 1/3 field portion.

Based on memory read pulses from memory read pulse generating circuits 22, the reproduction video signals stored in the memory 21 are read out in order from the reproduction video signal of low line number N. These reproduction video signals are sent to a synchronous addition circuit 23. Here, after addition of vertical synchronizing signals, etc. supplied from a synchronizing signal use ROM 24, conversion to analog signals in a D/A (digital to analog) converter 25 is performed, and output as analog variable speed reproduction use video signals 26 onto, for example, the simplified monitor 9 described above occurs.

Further, in the above configuration, the reproduction video signals reproduced by the heads $C_1$ - $C_2$ and heads $D_1$ - $D_2$ were stored onto the identical memory 21, but it is also possible to have a configuration where the reproduction video signals reproduced by head $C_1$ or $C_2$ and the reproduction video signals reproduced by head $D_1$ or $D_2$ are stored onto separate memories, the reproduction video signals of the 2 memories are read out alternately at read-out time, and output is performed in order from the low line number signals.

Next, an explanation on the basis of Figs. 7 to 9 of the embodiment for the case where variable speed reproduction is performed in a triple speed mode which sends the magnetic tape 5 at a speed 3 times that of ordinary reproduction yields the following.

As shown in Figs. 7 and 8, in the first retrace by heads $C_1$ - $D_1$ in a triple speed mode, the head $C_1$ partially retraces the five tracks T0 to T4 paralleling the arrow $F_{1a}$, and reproduces the signals for the six lines which constitute part of the signals for the tracks T0, T2, T4 (shown by the hatching part of Fig. 7), that is, the signals corresponding to the lines of line numbers "0", the first half of "6", the latter half of "8", followed by "14" and "20", the first half of "26", the latter half of "28", and "34".

Simultaneous with this, the head $D_1$, from a starting point three tracks removed from that of the head $C_1$, partially retraces the five tracks T3 to T1$^1$ paralleling the arrow $F_{1b}$, and reproduces the signals for the six lines constituting part of the signals for tracks T3, T5 and T1$^1$. Following this, tracks are retraced by the heads $C_2$ - $D_2$ paralleling, respectively, the arrows $F_{2a}$ and $F_{2b}$. Further, retrace is conducted alternately by the heads $C_1$ - $D_1$ and by the heads $C_2$ - $D_2$.

Fig. 9 shows the situation where scanning has been performed on the HDTV screen only with the signals reproduced in the first retrace by the heads $C_1$ - $D_1$. In this case, as well, since reproduction occurs for the most part at equal intervals of two omitted lines, it is possible to form a variable speed reproduction image only with a one-time retrace by the heads $C_1$ - $D_1$ or $C_2$ - $D_2$.

Next, an explanation referring to Figs. 10 to 12 of the embodiment for the case where variable speed reproduction occurs in a quadruple speed mode sending the magnetic tape 5 at a speed four times that of ordinary reproduction yields the following.

As is shown by Fig. 10 and Fig. 11 (a) (b), in the first retrace by the heads $C_1$ - $D_1$ in a quadruple speed mode, the head $C_1$ partially retraces the seven tracks T0 to T0$^1$ paralleling the arrow $F_{1a}$ and reproduces, as shown by the hatching in Fig. 10, the signals for six lines constituting part of the signals for tracks T0, T2, T4 and T0$^1$.

Simultaneous with this, the head $D_1$, from a starting point three tracks removed from that of the head $C_1$, partially retraces the seven tracks T3 to T3$^1$ paralleling the arrow $F_{1b}$, and reproduces the signals for the six lines constituting part of the signals for tracks T3, T5, T1$^1$ and T3$^1$. Following this, tracks are retraced by the heads $C_2$ - $D_2$ paralleling, respectively, the arrows $F_{2a}$ - $F_{2b}$. Further, retrace is performed alternately by the heads $C_1$ - $D_1$ and $C_2$ - $D_2$.

Fig. 12 (a) shows the situation where scanning has been performed on the HDTV screen only with the signals reproduced in the first retrace by the heads $C_1$ - $D_1$, while Fig. 12 (b) shows the situation where scanning has been performed on the HDTV screen only with the signals reproduced in the second retrace by the heads $C_2$ - $D_2$. In this case, as well, since reproduction occurs for the most part at equal intervals of two lines, it is possible to form a variable speed reproduction image only with the one-time retrace by the heads $C_1$ - $D_1$ or $C_2$ - $D_2$.

Next, a modified embodiment for the case where variable speed reproduction is performed in a double speed mode will be explained.

In the case of variable speed reproduction in double speed mode described above, for example, in Fig. 3 (a) the interval of omitted lines between the lines of line numbers "15" and "20" is irregular. With the present embodiment, however, by combining the matching parts of the signals of two continuous fields, it is possible to conduct variable speed reproduction at perfect intervals of two lines.

Thus, in the present embodiment, the heads $C_1$ - $D_1$ and $C_2$ - $D_2$ are identical to those used in each of the above-described embodiments and the retraces conducted by the heads $C_1$ - $D_1$ and $C_2$ - $D_2$ are completely identical to those of the above-described embodiments (Figs. 1 and 2). Afterwards, using, for example, the reproduction processing circuit shown in Fig. 6, if the signals of the six lines of line numbers "0" to "15" constituting part of the signals reproduced in the first retrace by the heads $C_1$ - $D_1$ and the signals of the six lines of line numbers "18$^1$" to "33$^1$" constituting part of the signals reproduced in the second retrace by the heads $C_2$ - $D_2$ are compounded, variable speed reproduction can be performed in double speed mode by means of the 12 lines of video signals at perfect two-line intervals. In this way, since the irregularity in omitted lines between the contiguous lines is eliminated, it is possible to achieve improvement of the picture quality of the variable speed reproduction pictorial image.

In Fig. 13 (b) to (d), similar examples are shown. In all cases, reproduction can be performed at perfect two-line intervals. Further, the $F_1$ in Fig. 13 (a) represents the combination of the $F_{1a}$ and $F_{1b}$ in Figs. 1 and 2 and signifies the signals reproduced in the first retrace by variable speed reproduction heads $C_1$ - $D_1$. $F_2$, $F_3$, etc. may be described in like manner. The numbers n appended to the upper right of the line numbers, as described in a similar manner above, indicate that the lines in question pertain to (n + 1) number field.

Next, in the case of quadruple speed mode, in a similar manner, an embodiment for the reduction in the irregularity of omitted lines between the contiguous lines will be shown.

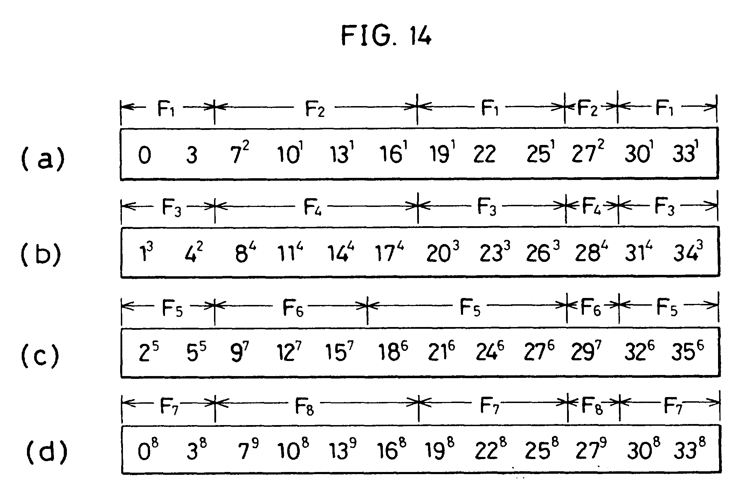

Fig. 14 (a) shows an example of the formation of a pictorial image for one field by means of combining a part of the signals reproduced in the first retrace by the heads $C_1$ - $D_1$ with a part of the signals reproduced in the second retrace by the heads $C_2$ - $D_2$ in the context of the above-described quadruple speed mode embodiment (see Fig. 11). As is clear from Fig. 14 (a), irregularities in the omitted lines between contiguous lines are limited to between the lines of line numbers "3" and "7$^2$" and the lines of line numbers "25$^1$" and "27$^2$", which represents a reduction from the irregularities in omitted lines in ordinary quadruple speed mode registered in the case of the above-described embodiment (see Fig. 12).

In Fig. 14 (b) to (d), similar examples are shown. Further, the $F_1$ in Fig. 14 (a) represents a combination of the $F_{1a}$ and $F_{1b}$ shown in Figs. 10 and 11, and signifies the signals reproduced in the first retrace of the variable speed reproduction heads $C_1$ - $D_1$. $F_2$, $F_3$, etc. may be described in a like manner. The numbers n appended to the upper right hand of the line numbers, as described in a similar manner above, indicate that the lines in question belong to (n + 1) number field.

Next, regarding the quadruple speed mode, an embodiment for the further reduction of irregularities in omitted lines between contiguous lines will be explained.

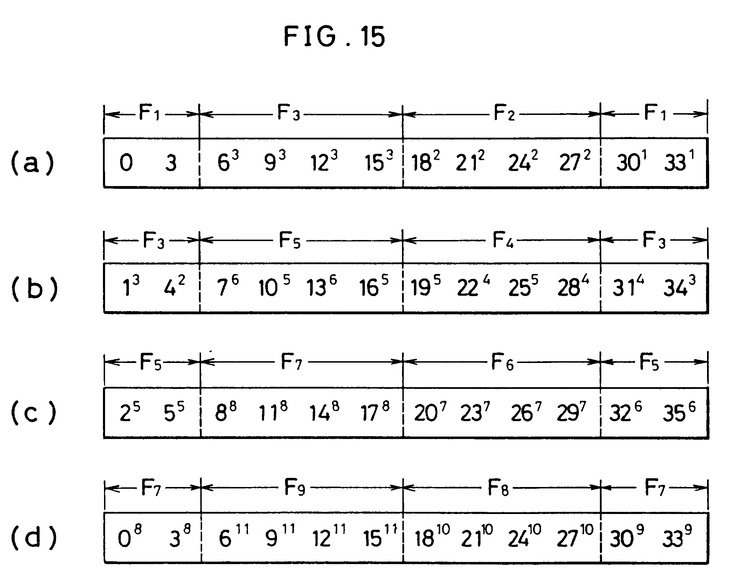

That is, if the capacity of the memory 21 (see Fig. 6), in which are stored the reproduction signals at the time of variable speed reproduction, is set at one field, as is shown in Fig. 15 (a), reproduction can be performed at perfect two-line intervals by compounding the signals reproduced in the total of three retraces from the first to the third retrace. Figs. 15 (b) to (d) show similar examples. In all these cases, the pictorial image of one field is formed by compounding the signals resulting from the three retraces. With regard to each of the compounding examples in Figs. 15 (a) to (d), since the amount of image information is small near the upper and lower ends of the screen and the influence on picture quality appears small, signals two to three fields prior to the lines in the center of the screen are used in these parts.

Otherwise, the $F_1$, $F_2$, etc. and the numbers appended to the upper right hand of the line numbers are used in Fig. 15 in the same manner as in the above-described embodiments.

In the above embodiments, the signals for one field were divided up and recorded onto six tracks and the variable speed reproduction heads $C_1$ - $D_1$ and $C_2$ - $D_2$ were set to perform retrace from positions three tracks removed from one another but, so long as line signals can be reproduced at almost regular line intervals by the variable speed reproduction heads $C_1$ - $D_1$ and $C_2$ - $D_2$, the above-mentioned setting can be changed as desired.

The video signal recording-reproduction device related to the present invention is a device which divides up and records onto a plurality of tracks video signals for one field and which reproduces the video signals recorded onto the tracks. It also has the characteristic of being able to form variable speed reproduction use video signals whose video signal band-width is compressed using part of the video signals recorded on the tracks by causing at least one of those setting conditions of the field frequency, the number of horizontal scanning lines per frame and the horizontal scanning frequency of video signals to be reproduced to vary with the setting conditions relating to the video signals recorded onto the tracks.

In this way, since the video signal band-width for variable speed reproduction is compressed more than that for ordinary reproduction, variable speed reproduction can be easily performed in conditions where, for example, the number of horizontal scanning lines has been made less than in ordinary reproduction.

Further, if a variable speed reproduction use display means conducting display of the pictorial image based on the variable speed reproduction use video signals during variable speed reproduction is incorporated into the above-described recording-reproduction device, even regarding an HDTV-use VTR, for example, this variable speed reproduction use display means can be made far smaller and more simplified than the HDTV screen. By displaying the variable speed reproduction image with this variable speed reproduction use display means, search by fast forward can be carried out with greater efficiency than in the case where the original HDTV screen is used.

Further, if a plural number of variable speed reproduction heads are provided for which the height disparities of the paired heads have been set in such a manner that the video signals corresponding to the horizontal scanning lines appearing at nearly regular line intervals on the reproduction screen can be reproduced from the tracks, it is possible to form a pictorial image possessing a picture quality sufficient for the conduct of search using only a part of the video signals recorded onto the tracks.

The invention may be embodied in other specific forms and manners without departing from its scope as defined by the claims.

## Claims

1. A video signal reproduction device which divides up and records video signals for one field on a plurality of tracks and reproduces the video signals recorded on the tracks, the device comprising:

   at least one pair of reproduction heads ($A_1$-$B_1$, $A_2$-$B_2$) for reproducing video signals from the plurality of tracks during normal speed operations; and
   variable speed reproduction means for forming video signals during variable speed reproduction, whose video signal bandwidth is compressed, using a portion of the video signals recorded on the tracks;
   said variable speed reproduction means including at least one pair of variable speed reproduction heads ($C_1$-$D_1$; $C_2$-$D_2$) for reproducing video signals from the plurality of tracks during variable speed operations, the heads of the or each pair of variable speed reproduction heads having height disparities ($G_1$) set in such a manner that video signals corresponding to horizontal scanning lines appearing at substantially regular line intervals on a reproduction screen are reproduced from the tracks.

2. A video signal reproduction device according to claim 1, wherein said height disparities ($G_1$) of the variable speed reproduction heads are set to three times the height disparities ($G_1'$) of the normal speed reproduction heads.

3. A video signal reproduction device according to claim 1 or claim 2, further comprising display means (9) for displaying a pictorial image based on the video signals produced during variable speed reproduction.

4. A video signal reproduction device according to claim 3, wherein said display means (9) comprises a small-sized cathode-ray tube or liquid crystal display.

5. A video signal reproduction device according to any one of claims 1 to 4, wherein said variable speed reproduction means comprises a reproduction processing circuit for rearranging the reproduced video signals to be in an order starting with a low line number first so as to form the video signals for variable speed reproduction.

6. A video signal reproduction device according to claim 5, wherein said reproduction processing circuit comprises:

a pair number computation circuit (14) which computes a pair number showing in which order a given signal was reproduced with respect to other signals reproduced by said variable speed reproduction heads;
a track number discrimination circuit (18) which discriminates track numbers based on track discrimination numbers appended to the video signals reproduced by said variable speed reproduction heads; and
a memory (21) in which reproduced video signals are stored and from which stored reproduced video signals are read out starting with a video signal representing a horizontal scanning line having a lowest line number.

7. A variable speed reproduction method for video signals divided up and recorded on tracks, comprising:

reproducing signals from a plurality of tracks at a speed varying from a normal reproduction speed by using a pair of variable speed reproduction heads ($C_1$-$D_1$), the variable speed reproduction heads not being utilized during normal speed operations;
rearranging the reproduced signals in order from a low line number to a high line number and forming variable speed reproduction video signals having this order; and
displaying a pictorial image on a reproduction screen based on the video signals formed from variable speed reproduction;
wherein the heads of said pair of variable speed reproduction heads ($C_1$-$D_1$) have height disparities ($G_1$) set in such a manner that video signals corresponding to horizontal scanning lines appearing at substantially regular line intervals on the reproduction screen are reproduced from the tracks.

8. A method according to claim 7, further comprising:

reproducing signals from a plurality of tracks at a speed varying from a normal reproduction speed by using a second pair of variable speed reproduction heads ($c_2$-$D_2$); and
forming said variable speed reproduction video signals by combining specified parts of the signals reproduced by the two pairs of variable speed reproduction heads ($C_1$-$D_1$,$C_2$-$D_2$).

9. A method according to claim 7 or claim 8, wherein the or each pair of variable speed reproduction heads have height disparities (G1) which are set to three times the height disparities ($G_1$') of reproduction heads used for normal speed reproduction.

10. A method according to any one of claims 7 to 9, wherein the variable speed reproduction pictorial image is displayed on a small-sized monitor (9).

**Patentansprüche**

1. Videosignal-Wiedergabevorrichtung, die Videosignale für ein Halbbild unterteilt und in mehreren Spuren aufzeichnet und die in den Spuren aufgezeichneten Videosignale wiedergibt, mit:

- mindestens einem Paar Wiedergabeköpfe ($A_1$-$B_1$, $A_2$-$B_2$) zum Abspielen von Videosignalen von den mehreren Spuren während Vorgängen mit normaler Geschwindigkeit; und
- einer Einrichtung für Wiedergabe mit variabler Geschwindigkeit zum Erzeugen von Videosignalen während Wiedergabe mit variabler Geschwindigkeit, deren Signalbandbreite komprimiert ist, unter Verwendung eines Teils der in den Spuren aufgezeichneten Videosignale;
- wobei diese Einrichtung für Wiedergabe mit variabler Geschwindigkeit mindestens ein Paar Köpfe ($C_1$-$D_1$; $C_2$-$D_2$) für Wiedergabe mit variabler Geschwindigkeit zum Abspielen von Videosignalen von den mehreren Spuren während Vorgängen mit variabler Geschwindigkeit aufweist, wobei die Köpfe des Paars für Wiedergabe mit variabler Geschwindigkeit oder jedes Paar dieselben Höhenunterschiede ($G_1$) aufweist, die in solcher Weise eingestellt sind, daß solche Videosignale von den Spuren abgespielt werden, die Horizontal-Abrasterzeilen entsprechen, die mit im wesentlichen regelmäßigen Zeilenintervallen auf einem Wiedergabeschirm erscheinen.

2. Videosignal-Wiedergabevorrichtung nach Anspruch 1, bei der die Höhenunterschiede ($G_1$) der Köpfe für Wiedergabe mit variabler Geschwindigkeit auf das Dreifache der Höhenunterschiede ($G_1'$) der Köpfe für Wiedergabe mit normaler Geschwindigkeit eingestellt sind.

3. Videosignal-Wiedergabevorrichtung nach Anspruch 1 oder Anspruch 2, ferner mit einer Anzeigeeinrichtung (9) zum Anzeigen eines veranschaulichenden Bilds auf Grundlage der während der Wiedergabe mit variabler Geschwindigkeit erzeugten Videosignale.

4. Videosignal-Wiedergabevorrichtung nach Anspruch 3, bei der die Anzeigeeinrichtung (9) eine kleine Kathodenstrahlröhre oder ein Flüssigkristalldisplay aufweist.

5. Videosignal-Wiedergabevorrichtung nach einem der Ansprüche 1 bis 4, bei der die Einrichtung für Wiedergabe mit variabler Geschwindigkeit eine Wiedergabe-Verarbeitungsschaltung zum Neuanordnen der abgespielten Videosignale aufweist, damit sich diese in einer Reihenfolge ausgehend von einer niedrigen Zeilennummer als erster befinden, um die Videosignale für Wiedergabe mit variabler Geschwindigkeit zu erzeugen.

6. Videosignal-Wiedergabevorrichtung nach Anspruch 5, bei der die Wiedergabe-Verarbeitungsschaltung folgendes aufweist:

   - eine Paarnummer-Berechnungsschaltung (14), die eine Paarnummer berechnet, die anzeigt, in welcher Reihenfolge ein angegebenes Signal hinsichtlich anderer Signale abgespielt wurden, die von den Köpfen für Wiedergabe mit variabler Geschwindigkeit abgespielt wurden;
   - eine Spurnummer-Erkennungsschaltung (18), die Spurnummern auf Grundlage von Spurerkennungsnummern erkennt, die an die Videosignale angefügt sind, die von den Köpfen für Wiedergabe mit normaler Geschwindigkeit abgespielt wurden; und
   - einen Speicher (21), in dem wiedergegebene Videosignale abgespeichert werden und aus dem abgespeicherte, wiedergegebene Videosignale ausgehend von einem Videosignal ausgelesen werden, das die Horizontal-Abrasterzeile mit der niedrigsten Zeilennummer repräsentiert.

7. Verfahren für Wiedergabe mit variabler Geschwindigkeit für Videosignale, die unterteilt und in Spuren aufgezeichnet sind, umfassend:

   - Abspielen von Signalen von mehreren Spuren mit einer Geschwindigkeit, die sich von der normalen Wiedergabegeschwindigkeit unterscheidet, unter Verwendung eines Paars Köpfe ($C_1$-$D_1$) für Wiedergabe mit variabler Geschwindigkeit, die während Vorgängen mit normaler Geschwindigkeit nicht verwendet werden;
   - Neuanordnen der abgespielten Signale in der Reihenfolge ab einer niedrigen Zeilennummer zu einer hohen Zeilennummer, und Erzeugen von Videosignalen bei Wiedergabe mit variabler Geschwindigkeit mit dieser Reihenfolge; und
   - Anzeigen eines veranschaulichenden Bilds auf einem Wiedergabeschirm auf Grundlage der bei der Wiedergabe mit variabler Geschwindigkeit erzeugten Videosignale;
   - wobei die Köpfe des Paars Köpfe ($C_1$-$D_1$) für Wiedergabe mit variabler Geschwindigkeit Höhenunterschiede ($G_1$) aufweisen, die auf solche Weise eingestellt sind, daß Videosignale, die Horizontal-Abrasterzeilen entsprechen, die mit im wesentlichen regelmäßigen Zeilenintervallen auf dem Wiedergabeschirm erscheinen, von den Spuren abgespielt werden.

8. Verfahren nach Anspruch 7, ferner folgendes umfassend:

   - Abspielen von Signalen von mehreren Spuren mit einer Geschwindigkeit, die sich von der normalen Wiedergabegeschwindigkeit unterscheidet, unter Verwendung eines zweiten Paars Köpfe ($C_2$-$D_2$) für Wiedergabe mit variabler Geschwindigkeit; und
   - Erzeugen der Videosignale bei Wiedergabe mit variabler Geschwindigkeit durch Kombinieren spezieller Teile der Signale, die durch die zwei Paare von Köpfen ($C_1$-$D_1$, $C_2$-$D_2$) für Wiedergabe mit variabler Geschwindigkeit abgespielt wurden.

9. Verfahren nach Anspruch 7 oder Anspruch 8, bei dem das Paar Köpfe für Wiedergabe mit variabler Geschwindigkeit oder jedes derselben Höhenunterschiede ($G_1$) aufweist, die auf das Dreifache der Höhenunterschiede ($G_1'$) bei Wiedergabeköpfen eingestellt sind, die bei Wiedergabe mit normaler Geschwindigkeit verwendet werden.

10. Verfahren nach einem der Ansprüche 7 bis 9, bei dem das veranschaulichende Bild bei Wiedergabe mit variabler Geschwindigkeit auf einem kleinen Monitor (9) angezeigt wird.

## Revendications

1. Dispositif de reproduction de signaux vidéo qui divise et enregistre des signaux vidéo correspondant à une trame sur une multiplicité de pistes et reproduit les signaux vidéo enregistrés sur les pistes, le dispositif comprenant:

   au moins une paire de têtes de reproduction ($A_1$-$B_1$, $A_2$-$B_2$) servant à reproduire des signaux vidéo à partir de la multiplicité de pistes lors d'opérations effectuées à la vitesse normale; et
   des moyens de reproduction à vitesse variable pour former des signaux vidéo pendant la reproduction à vitesse variable, la largeur de bande des signaux vidéo étant comprimée, en utilisant une partie des signaux vidéo enregistrés sur les pistes;
   lesdits moyens de reproduction à vitesse variable comprenant au moins une paire de têtes de reproduction à vitesse variable ($C_1$-$D_1$; $C_2$-$D_2$) servant à reproduire des signaux vidéo à partir de la multiplicité de pistes pendant des opérations à vitesse variable, les têtes de la paire ou de chaque paire de têtes de reproduction à vitesse variable comportant des disparités de hauteur ($G_1$) établies de manière à ce que des signaux vidéo correspondant à des lignes de balayage horizontal apparaissant à des intervalles de lignes sensiblement réguliers sur un écran de reproduction soient reproduits à partir des pistes.

2. Dispositif de reproduction de signaux vidéo selon la revendication 1, dans lequel lesdites disparités de hauteur ($G_1$) des têtes de reproduction à vitesse variable sont établies de façon à correspondre à trois fois les disparités de hauteur ($G_1'$) des têtes de reproduction à vitesse normale.

3. Dispositif de reproduction de signaux vidéo selon la revendication 1 ou la revendication 2, comprenant, en outre, des moyens d'affichage (9) servant à afficher une image visuelle sur la base des signaux vidéo produits pendant la reproduction à vitesse variable.

4. Dispositif de reproduction de signaux vidéo selon la revendication 3, dans lequel lesdits moyens d'affichage (9) comprennent un afficheur à cristaux liquides ou un tube à rayons cathodiques de petites dimensions.

5. Dispositif de reproduction de signaux vidéo selon l'une quelconque des revendications 1 à 4, dans lequel lesdits moyens de reproduction à vitesse variable comprennent un circuit de traitement de reproduction pour redisposer les signaux vidéo reproduits pour qu'ils soient dans un ordre commençant tout d'abord par un numéro de ligne bas de façon à former les signaux vidéo en vue d'une reproduction à vitesse variable.

6. Dispositif de reproduction de signaux vidéo selon la revendication 5, dans lequel ledit circuit de traitement de reproduction comprend:

   un circuit de calcul de numéros de paires (14) qui calcule un numéro de paire indiquant l'ordre dans lequel un signal donné a été reproduit par rapport à d'autres signaux reproduits par lesdites têtes de reproduction à vitesse variable;
   un circuit de discrimination de numéros de piste (18) qui discrimine des numéros de piste sur la base de numéros de discrimination de piste annexés aux signaux vidéo reproduits par lesdites têtes de reproduction à vitesse variable; et
   une mémoire (21) dans laquelle des signaux vidéo reproduits sont stockés et à partir de laquelle des signaux vidéo stockés sont extraits en commençant par un signal vidéo représentant une ligne de balayage horizontal dont le numéro de ligne est le plus bas.

7. Procédé de reproduction à vitesse variable pour des signaux vidéo divisés et enregistrés sur des pistes, comprenant les étapes consistant:

   à reproduire des signaux à partir d'une multiplicité de pistes à une vitesse différente d'une vitesse de reproduction normale en utilisant une paire de têtes de reproduction à vitesse variable ($C_1$-$D_1$), les têtes de reproduction à vitesse variable n'étant pas utilisées pendant les opérations effectuées à la vitesse normale;
   à redisposer les signaux reproduits dans un ordre allant d'un numéro de ligne bas à un numéro de ligne élevé et à former des signaux vidéo de reproduction à vitesse variable présentant cet ordre; et
   à afficher une image visuelle sur un écran de reproduction sur la base des signaux vidéo formés à partir de la reproduction à vitesse variable;
   dans lequel les têtes de ladite paire de têtes de reproduction à vitesse variable ($C_1$-$D_1$) ont des disparités de hauteur ($G_1$) établies de manière à ce que des signaux vidéo correspondant à des lignes de balayage horizontal apparaissant à des intervalles de lignes sensiblement réguliers sur l'écran de reproduction soient reproduits à partir des pistes.

8. Procédé selon la revendication 7, comprenant, en outre, les étapes consistant:

à reproduire des signaux à partir d'une multiplicité de pistes à une vitesse différente d'une vitesse de reproduction normale en utilisant une seconde paire de têtes de reproduction à vitesse variable ($C_2$-$D_2$); et

à former lesdits signaux vidéo de reproduction à vitesse variable en combinant des parties spécifiées des signaux reproduits par les deux paires de têtes de reproduction à vitesse variable ($C_1$-$D_1$, $C_2$-$D_2$).

9. Procédé selon la revendication 7 ou la revendication 8, dans lequel la paire ou chaque paire de têtes de reproduction à vitesse variable présente des disparités de hauteur ($G_1$) qui sont établies de façon à être égales à trois fois les disparités de hauteur ($G_1'$) des têtes de reproduction utilisées pour la reproduction à vitesse normale.

10. Procédé selon l'une quelconque des revendications 7 à 9, dans lequel l'image visuelle de reproduction à vitesse variable est affichée sur un écran de petites dimensions (9).

FIG. 1

FIG. 2

FIG. 3 (b)

FIG. 3 (a)

FIG. 4

FIG. 5

FIG. 6

FIG. 7

5

F_{1a}

F_{1b}

F_{2a}

F_{2b}

Q

P

T0

T1

T2

T3

T4

T5

T0'

T1'

T2'

T3'

T4'

T5'

FIG. 8

# FIG. 9

# FIG. 10

EP 0 424 138 B1

# FIG. 11 (a)

EP 0 424 138 B1

FIG. 11 (b)

FIELD 3 · FIELD 4 · FIELD 5

$F_{2a}$, $F_{2b}$, $F_{3a}$, $F_{3b}$

EP 0 424 138 B1

FIG. 12 (a)

FIG. 12 (b)

Figure 12(a) values: 0, 3, 8, 11, 14, 17, $19^1$, 22, $25^1$, 28, $30^1$, $33^1$

Figure 12(b) values: $2^1$, $5^1$, $7^2$, $10^1$, $13^2$, $16^1$, $18^2$, $21^2$, $24^2$, $27^2$, $32^2$, $35^2$

# FIG. 13

(a)

$F_1$ — $F_2$

| 0 | 3 | 6 | 9 | 12 | 15 | $18^1$ | $21^1$ | $24^1$ | $27^1$ | $30^1$ | $33^1$ |

(b)

$F_3$ — $F_4$

| $2^1$ | $5^1$ | $8^1$ | $11^1$ | $14^1$ | $17^1$ | $20^2$ | $23^2$ | $26^2$ | $29^2$ | $32^2$ | $35^2$ |

(c)

$F_5$ — $F_6$

| $1^3$ | $4^2$ | $7^3$ | $10^2$ | $13^3$ | $16^2$ | $19^4$ | $22^3$ | $25^4$ | $28^3$ | $31^4$ | $34^3$ |

(d)

$F_7$ — $F_8$

| $0^4$ | $3^4$ | $6^4$ | $9^4$ | $12^4$ | $15^4$ | $18^5$ | $21^5$ | $24^5$ | $27^5$ | $30^5$ | $33^5$ |

FIG. 14

EP 0 424 138 B1

(a)

| $F_1$ | $F_2$ | $F_1$ | $F_2$ | $F_1$ |

| 0 | 3 | $7^2$ | $10^1$ | $13^1$ | $16^1$ | $19^1$ | 22 | $25^1$ | $27^2$ | $30^1$ | $33^1$ |

(b)

| $F_3$ | $F_4$ | $F_3$ | $F_4$ | $F_3$ |

| $1^3$ | $4^2$ | $8^4$ | $11^4$ | $14^4$ | $17^4$ | $20^3$ | $23^3$ | $26^3$ | $28^4$ | $31^4$ | $34^3$ |

(c)

| $F_5$ | $F_6$ | $F_5$ | $F_6$ | $F_5$ |

| $2^5$ | $5^5$ | $9^7$ | $12^7$ | $15^7$ | $18^6$ | $21^6$ | $24^6$ | $27^6$ | $29^7$ | $32^6$ | $35^6$ |

(d)

| $F_7$ | $F_8$ | $F_7$ | $F_8$ | $F_7$ |

| $0^8$ | $3^8$ | $7^9$ | $10^8$ | $13^9$ | $16^8$ | $19^8$ | $22^8$ | $25^8$ | $27^9$ | $30^8$ | $33^8$ |

EP 0 424 138 B1

## FIG. 15

(a)

| ←—F₁—→ | ←————F₃————→ | ←————F₂————→ | ←—F₁—→ |
|---|---|---|---|
| 0   3 | $6^3$  $9^3$  $12^3$  $15^3$ | $18^2$  $21^2$  $24^2$  $27^2$ | $30^1$  $33^1$ |

(b)

| ←—F₃—→ | ←————F₅————→ | ←————F₄————→ | ←—F₃—→ |
|---|---|---|---|
| $1^3$   $4^2$ | $7^6$  $10^5$  $13^6$  $16^5$ | $19^5$  $22^4$  $25^5$  $28^4$ | $31^4$  $34^3$ |

(c)

| ←—F₅—→ | ←————F₇————→ | ←————F₆————→ | ←—F₅—→ |
|---|---|---|---|
| $2^5$   $5^5$ | $8^8$  $11^8$  $14^8$  $17^8$ | $20^7$  $23^7$  $26^7$  $29^7$ | $32^6$  $35^6$ |

(d)

| ←—F₇—→ | ←————F₉————→ | ←————F₈————→ | ←—F₇—→ |
|---|---|---|---|
| $0^8$   $3^8$ | $6^{11}$  $9^{11}$  $12^{11}$  $15^{11}$ | $18^{10}$  $21^{10}$  $24^{10}$  $27^{10}$ | $30^9$  $33^9$ |

FIG. 16

FIG. 17

FIG.18 (a)

FIG.18 (b)

FIG.18 (c)

EP 0 424 138 B1

FIG. 19

FIG. 20

## FIG. 21(a)

## FIG. 21(b)

FIG. 22

# FIG. 23

| | T0 | T1 | T2 | T3 | T4 | T5 | | T0' | T1' | T2' | T3' | T4' | T5' |
|---|---|---|---|---|---|---|---|---|---|---|---|---|---|
| | 0 | 1 | 2 | 3 | 4 | 5 | | 0' | 1' | 2' | 3' | 4' | 5' |
| | 6 | 7 | 8 | 9 | 10 | 11 | | 6' | 7' | 8' | 9' | 10' | 11' |
| | 12 | 13 | 14 | 15 | 16 | 17 | | 12' | 13' | 14' | 15' | 16' | 17' |
| | 18 | 19 | 20 | 21 | 22 | 23 | | 18' | 19' | 20' | 21' | 22' | 23' |
| | 24 | 25 | 26 | 27 | 28 | 29 | | 24' | 25' | 26' | 27' | 28' | 29' |
| | 30 | 31 | 32 | 33 | 34 | 35 | | 30' | 31' | 32' | 33' | 34' | 35' |

$F_{1a}$  $F_{1b}$

$F_{2a}$  $F_{2b}$

FIELD 1

FIELD 2

# FIG. 24

FIG. 25

# FIG.26(a)

# FIG.26(b)

EP 0 424 138 B1

EP 0 424 138 B1

## FIG.27(a)

## FIG.27(b)